# EUROPEAN PATENT SPECIFICATION

(11) **EP 3 368 838 B1**
(45) Date of publication and mention of the grant of the patent: **10.12.2025**
(21) Application number: 16788125.9
(22) Date of filing: 28.10.2016
(51) Int. Cl.: F25B 25/00

(54) **HEAT PUMP AND METHOD FOR PUMPING HEAT WITH A BYPASS MODE**
WÄRMEPUMPE UND VERFAHREN ZUM PUMPEN VON WÄRME MIT EINEM BYPASS-MODUS
POMPE À CHALEUR ET PROCÉDÉ DE POMPAGE DE CHALEUR AVEC UN MODE DE DÉRIVATION

(30) Priority: 30.10.2015 DE 102015221345
(43) Date of publication of application: 05.09.2018
(73) Proprietor: Vertiv S.r.l., 35010 Piove di Sacco, (PD) (IT)
(72) Inventor: SEDLAK, Holger, 82054 Lochhofen / Sauerlach (DE); KNIFFLER, Oliver, 82054 Sauerlach (DE)
(74) Representative: Wunderlich & Heim Patentanwälte PartG mbB
(86) International application number: PCT/EP2016/076131
(87) International publication number: WO 2017/072321

(56) References cited:
- EP-A2- 2 458 304
- DE-A1- 102010 049 134
- US-A1- 2015 068 228

## Description

The present invention relates to heat pump applications and in particular to heat pumps comprising operating mode switching.

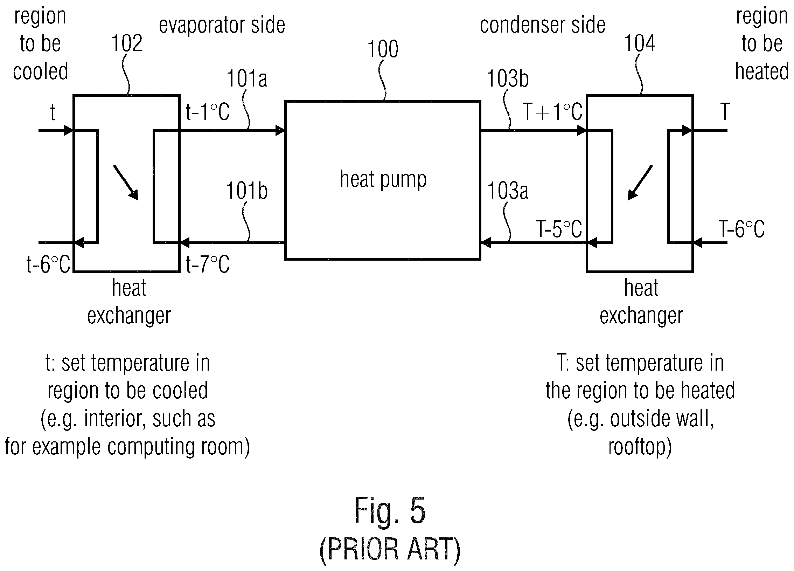

Typical fields of usage of heat pumps are to cool a region to be cooled and/or to heat a region to be heated. A heat pump typically consisting of an evaporator, a compressor and a condenser comprises, for this purpose, an evaporator side on the one hand and a condenser side on the other hand, as is shown exemplarily by the heat pump 100 in Fig. 5. The heat pump is coupled to a heat exchanger 102 on the evaporator side and a heat exchanger 104 on the condenser side. For this purpose, the heat pump 100 in particular includes an evaporator inlet 101a and an evaporator outlet 101b. Above that, the heat pump 100 comprises a condenser inlet 103a and a condenser outlet 103b. The operating liquid on the evaporator side is introduced into the evaporator of the heat pump 100 via the evaporator inlet 101a, cooled there and let out from the evaporator outlet 101b as colder operating liquid. At the same time, as shown in Fig. 5, the evaporator inlet 101a and the evaporator outlet 101b are coupled to the heat exchanger 102, such that a hotter operating liquid (having the temperature t) is fed into the heat exchanger, cooled in the heat exchanger and then transported to the region to be cooled. Typical temperature ratios are shown in Fig. 5, wherein a "heat exchanger loss" of 1 °Celsius is assumed. In particular, e.g., the set temperature is in the region to be cooled.

The heat exchanger 102 or 104 has a primary side directed towards the heat pump and a secondary side facing away from the heat pump, i.e. to the region to be cooled or the region to be heated. The primary side of the heat exchanger 102 includes the hot terminal 101a and the cold terminal 101b, wherein "hot" and "cold" are to be seen as terms, and wherein the medium is hotter in terminal 101a than in terminal 101b. Accordingly, the hot terminal of the primary side of the heat exchanger 104 is the terminal 103b, and the cold terminal is the terminal 103a. On the secondary side of the heat exchangers 102 or 104, the hot terminal is in each case the top terminal and the cold terminal is in each case the bottom terminal in Fig. 5.

On the condenser side of the heat pump 100, the condenser outlet 103b is connected to the "hot" terminal of the heat exchanger 104, and the condenser inlet is connected to the colder end of the heat exchanger 104. Above that, on its other side facing away from the heat pump 100, the heat exchanger is connected to the region to be heated, where a set temperature T should prevail.

If the heat pump is used as a cooling unit, the region to be cooled will, so to speak, be the "effective side". The region to be cooled can, for example, be an indoor room, such as a computer room or another room to be cooled or air-conditioned. Then, the region to be heated would, for example, be the outside wall of a building or a rooftop or another region into which waste heat is to be introduced. If, however, the heat pump 100 is used as heating, the region to be heated will, so to speak, be the "effective side" and the region to be cooled would, for example, be soil, ground water or the like.

In such heat pump applications as shown in Fig. 5, it is problematic that the configuration does not take into consideration that the ambient temperature of the region to be heated, when the same is, for example, outdoors, varies heavily. In winter, temperatures of -20 °Celsius can prevail, and in summer temperatures of over 30 °Celsius. If, for example, an application is considered where a computer room is air-conditioned, it would be sufficient, for the case that the ambient temperature is, e.g., in the range of or below the set temperature in the region to be cooled, to no longer air-condition the computer room at all, but to simply "open the windows". This is, however, problematic, since computer rooms do not necessarily have windows and because, at the same time when such cooling is considered, it is relatively difficult to check that there is a constant temperature in the room, because of the fact that particularly cold zones might possibly form close to the windows, if there are any, while further away from the windows or behind specific racks hot zones form that might not be sufficiently cooled. On the other hand, it is problematic in that, in a heat pump configuration such as is illustrated in Fig. 5, the fact that the ambient temperatures can vary heavily and in particular frequently lie within ranges where cooling is normally not necessitated, is not put to effective use. For that reason, a configuration as illustrated in Fig. 5 is implemented for the worst-case situation, i.e. for example for a very hot summer day, although such a hot summer day is, on average, very rare, at least in Germany, and the main part of the time within one year has temperatures where the necessitated cooling capacity is far below the requested worst-case situation.

DE 10 2012 208 174 A1 discloses a heat pump with a free cooling mode. In the free cooling mode, the evaporator inlet is connected to a return from the region to be heated. Further, the condenser inlet is connected to a return from the region to be cooled. By the free cooling mode, a significant efficiency increase is already obtained, in particular for outside temperatures of less than, for example 22 °C.

However, the free cooling mode also does not obtain the maximum energy-saving potential.

It is the object of the present invention to provide a more efficient heat pump concept. This object is solved by a heat pump according to claim 1, a method for pumping heat according to claim 14 or a heat pump system according to claim 15. A heat pump according to one aspect includes an evaporator with an evaporator inlet and an evaporator outlet as well as a condenser with a condenser inlet and a condenser outlet. Above that, a switching means is provided for operating the heat pump in a first operating mode or a second operating mode. In the first operating mode, the heat pump is completely bypassed in that the return of the region to be cooled is directly connected to the forward of the region to be heated. Above that, in this bypass mode, the return of the region to be heated is connected to the forward of the region to be cooled. Typically, the evaporator is allocated to the region to be cooled and the condenser to the region to be heated.

In the first operating mode or bypass mode, however, the evaporator is not connected to the region to be cooled and further the condenser is also not connected to the region to be cooled, but both regions are, so to speak "short-circuited". In the second alternative operating mode, however, the heat pump is not bypassed but typically operated in the free cooling mode at still relatively low temperatures or in the normal mode. In the free cooling mode, the switching means is configured to connect a return of the region to be cooled to the condenser inlet and to connect a return of the region to be heated to the evaporator inlet. On the other hand, in the normal mode, the switching means is configured to connect the return of the region to be cooled to the evaporator inlet and to connect the return of the region to be heated to the condenser inlet.

Depending on the embodiment, at the output of the heat pump, i.e. on the condenser side, or at the input of the heat pump, i.e. on the evaporator side, a heat exchanger can be provided for decoupling the inner heat pump cycle from the outer cycle with regard to liquids. In that case, the evaporator inlet represents the inlet of the heat exchanger coupled to the evaporator. Above that, in that case the evaporator outlet represents the outlet of the heat exchanger which is again firmly coupled to the evaporator.

Analogously, on the condenser side, the condenser outlet is a heat exchanger outlet and the condenser inlet is a heat exchanger inlet on the side of the heat exchanger which is not firmly coupled to the actual condenser.

Alternatively, however, the heat pump can be operated without a heat exchanger on the input side or on the output side. Then, e.g. at the input into the region to be cooled or at the input into the region to be heated, a heat exchanger could respectively be provided, which then includes the return or forward to the region to be cooled or to the region to be heated.

In preferred embodiments of the present invention, the heat pump is used for cooling, such that the region to be cooled is, for example, a room of a building, a computer room or generally a refrigeration room, while the region to be heated is, for example, a roof of a building or a similar position where a heat dissipation device can be placed in order to dissipate heat to the environment.

If, however, as an alternative, the heat pump is used for heating, the region to be cooled is the environment from which energy is to be drawn and the region to be heated, is the "effective application", i.e. for example the inside of a building, a house or a room to be heated.

Thus, the heat pump according to the first aspect is able to switch from the bypass mode either into the free cooling mode, or if such a free cooling mode is not implemented, into the normal mode.

Generally, the heat pump according to the first aspect is advantageous in that the same becomes particularly efficient when outside temperatures prevail that are, for example, less than 16°C, which is frequently the case, at least in areas of the northern and southern hemisphere distant from the equator.

Thereby, it is obtained that the heat pump can be completely switched off at outside temperatures where direct cooling is possible. In the case of a heat pump with a radial compressor as temperature raiser between the evaporator and the condenser, the radial impeller can be stopped and no more energy has to be supplied to the heat pump. Alternatively, the heat pump can still run in a stand-by mode or the like which, however, causes only little current consumption since the same is only a stand-by mode. In particular in heat pumps without valves, as they are preferably used, a heat short-circuit can be prevented by completely bypassing the heat pump, in contrary to the free-cooling mode.

Above that, it is preferred that in the first operating mode, i.e. in the bypass mode, the switching means separates the return of the region to be cooled or the forward of the region to be cooled completely from the evaporator, such that no liquid connection between inlet and outlet, respectively, of the evaporator and the region to be cooled exists. This complete separation will also be advantageous on the condenser side.

In implementations, a temperature sensor means is provided that detects a first temperature with regard to the evaporator or a second temperature with regard to the condenser. Further, the heat pump has a control that is coupled to the temperature sensor means and is configured to control, in dependence on one or several temperatures detected in the heat pump, the switching means, such that the switching means switches from the first to the second operating mode or vice versa. The implementation of the switching means can be implemented by an input switch and an output switch, each comprising four inputs and four outputs and being switchable depending on the mode. Alternatively, the switching means can also be implemented by several individual cascaded switches, each having an input and two outputs.

Further, as coupling element for coupling the bypass line to the forward into the region to be heated or the coupler for coupling the bypass line to the forward into the region to be cooled, can be configured as a simple three-terminal combination, i.e. as liquid adder. However, in order to have optimum decoupling, it is preferred in implementations to configure the couplers also as switches or integrated in the input switch and output switch, respectively.

Additionally, as specific temperature sensor, a first temperature sensor is used on the evaporator side and a second temperature sensor is used on the condenser side as second temperature sensor, wherein an even more direct measurement is preferred. The evaporator side measurement is particularly used for performing speed control of the temperature raiser, i.e. a compressor, while the measurement on the condenser side or also a measurement of the environmental temperature, is used for performing mode control, i.e. to switch the heat pump, e.g., from the bypass mode to the free cooling mode when a temperature is no longer in the very cold temperature range but in the medium-cold temperature range. If the temperature is higher, i.e. in a hot temperature range, the switching means will bring the heat pump in a normal mode.

In a two-stage heat pump, in this normal mode, merely a first stage will be active, while the second stage is still inactive, i.e. is not supplied with current and hence necessitates no energy. Only when the temperature rises further, into a very hot range, a second pressure stage will be activated in addition to the first heat pump stage or in addition to the first pressure stage, which again comprises a condenser, a temperature raiser, typically in the form of a radial compressor and a condenser. The second pressure stage can be connected in series or in parallel or in series/parallel to the first pressure stage.

In order to ensure that in the bypass mode, i.e., when the outside temperature is already relatively cold, the cold from the outside does not completely enter the heat pump system and above that into the room to be cooled, i.e. makes the room to be cooled even cooler than it should be, it is preferred to provide, based on a sensor signal at the forward into the region to be cooled or at the return of the region to be cooled, a control signal that can be used by a heat dissipation device mounted outside the heat pump for controlling heat dissipation, i.e. to reduce the same when the temperatures become too cold. The heat dissipation device is, for example a liquid/air heat exchanger having a pump for circulating the liquid introduced into the region to be heated. Further, the heat dissipation device can comprise a fan for transporting air into the air heat exchanger. Additionally or alternatively, a three-way mixer can be provided for partly or completely short-circuiting the air heat exchanger. Depending on the forward into the region to be cooled which, however, in this bypass mode, is not connected to the condenser outlet, but to the return from the region to be heated, the heat dissipation device, i.e., for example the pump, the fan or the three-way mixer is controlled for reducing the heat dissipation further and further so that a temperature level, which may in this case be above the outside temperature level, is maintained both in the heat pump system and in the region to be cooled. Thereby, the waste heat can even be used for heating the room "to be cooled" when the outside temperatures are too cold.

In a further aspect, the entire control of the heat pump is performed such that depending on a temperature sensor output signal of a temperature sensor on the evaporator side, "fine control" of the heat pump is performed, i.e. speed control in the different modes, i.e. for example the free cooling mode, the normal mode with a first stage and the normal mode with a second stage and also control of the heat dissipation device in the bypass mode, while mode switching is performed based on a temperature sensor output signal of a temperature sensor on the condenser side. Thereby, merely based on a condenser side temperature sensor, operating mode switching from the bypass mode into the free cooling mode and/or into the normal mode is performed, wherein for a decision whether switching takes place, the temperature output signal on the evaporator side is not used. However, for speed control of the radial compressor or for controlling the heat dissipation devices, again, merely the temperature output signal on the evaporator side is used, but not the sensor output signal on the condenser side.

It should be noted that the different aspects of the present invention, on the one hand the usage of the bypass mode, on the other hand the control of the heat dissipation device in the bypass mode or free cooling mode and the control of the radial compressor in the free cooling mode or the normal operating mode on the other hand, or also the third aspect of using two sensors, wherein one sensor is used for operating mode switching and the other sensor for fine control, can be used independently of one another. However, these aspects can also be combined in pairs or together.

Advantages of the first aspect are that, when the outside temperatures are cold enough, the heat pump can be completely bypassed and hence has to consume no energy. For obtaining security that the entire system and in particular the region to be cooled do not become too cold, the heat dissipation device is controlled in order to obtain, in a way, "isolation" from the outside world that is too cold.

The second aspect is advantageous in that exactly that insulation from the outside world is obtained independent of whether the heat pump runs in the bypass mode or in the free cooling mode when, for example, only the free cooling mode and the normal mode are implemented but not the bypass mode. Then, typically at low speed of the heat pump which should not be completely switched off for preventing short-circuit within the heat pump, undercooling of the system and region to be cooled can still be prevented.

The third aspect is advantageous in that transparent and efficient control is obtained, obtaining, on the one hand, "coarse control" due to the mode switching and, on the other hand, "fine control" due to the temperature-dependent speed control in that only that much energy is consumed as is actually needed at the time. This procedure where the heat pump is not constantly switched on and switched off, for example in known heat pumps with hysteresis, also ensures that due to the continuous operation no start-up losses occur.

Preferred embodiments of the present invention will be discussed in more detail below with reference to the accompanying drawings. They show:
- Fig. 1: a heat pump according to an embodiment of the present invention with a common implementation of all three aspects;
- Fig. 2: a heat pump according to an embodiment with a configuration of the switching means with individual switches;
- Fig. 3: an illustration of an internal structure of the heat pump of Fig. 1 or Fig. 2;
- Fig. 4: an overview of the different operating modes with temperature ranges and exemplary temperatures;
- Fig. 5: an arrangement of a heat pump system between two heat exchangers;
- Fig. 6: a configuration of the heat pump of Fig. 1 or 2 in the normal operating mode;
- Fig. 7: a parallel connection of two heat pump stages for exemplary implementation of the heat pump of Fig. 1 or Fig. 2;
- Fig. 8A: an embodiment of a heat pump for the second aspect;
- Fig. 8B: a detailed representation of the heat dissipation device and the heat pump of Fig. 8A;
- Fig. 9A: an embodiment of a heat pump with an implementation of three aspects and input/output switches;
- Fig. 9B: an illustration of the mode controls according to the third aspect based on temperature on the condenser side and the temperature on the evaporator side; and
- Fig. 9C: a representation of the input switch and the output switch of Fig. 9A and a table for the switching states for the different operating modes.

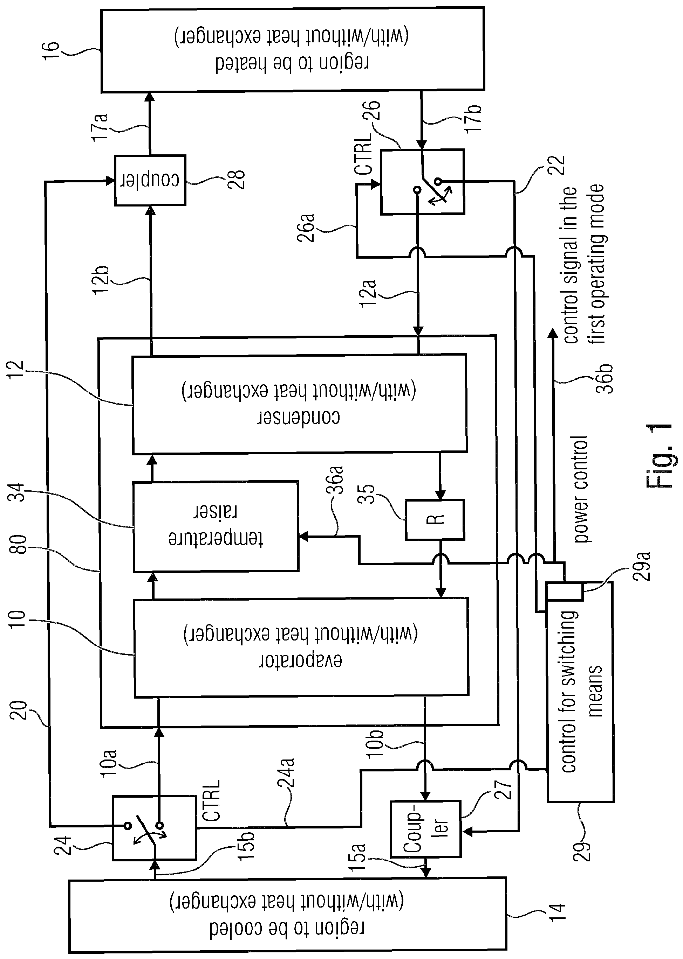

Fig. 1 shows a heat pump according to the present invention having an evaporator 10 comprising an evaporator inlet 10a and an evaporator outlet 10b. Further, the heat pump includes a condenser 12 with a condenser inlet 12a and a condenser outlet 12b. Apart from the switching means that can be implemented by elements 24, 26, 27, 28, the evaporator inlet 10a is connected to a return 15b from a region to be cooled 14. Above that, apart from the coupler 27, the evaporator outlet 10b is connected to a forward 15a into the region to be cooled 14.

On the condenser side, the condenser outlet 12b is connected to a forward 17a, again apart from the coupler 28, to a region to be heated 16. Above that, the region to be heated 16, and in particular its return 17b is, again apart from the switch 26, connected to the condenser inlet 12a. Thus, the heat pump includes a switching means preferably implemented by elements 24, 26, 27, 28 and that is configured to connect, in the first operating mode, a return, namely the return 15b of the region to be cooled 14, to the forward 17a of the region to be heated 17 via a first bypass line 20 and to connect a return 17b of the region to be heated 16 to the forward 15a of the region to be cooled 14 via a further bypass line 22. Further, the heat pump means is configured to connect, in a second operating mode, the return 15b of the region to be cooled 14 to the evaporator inlet 10a (in the normal mode) or the condenser inlet 12a (in the free cooling mode), and to connect the return 17b of the region to be heated 16 to the condenser inlet 12a (in normal operation or normal mode) or the evaporator inlet 10a (in the free cooling mode).

In embodiments, the switching means is configured to separate, in the first operating mode, the return 15b of the region to be cooled 14 or the forward 15a of the region to be cooled from the condenser 10 or its inlet 10a and outlet 10b, respectively, such that no liquid connection exists between the forward 15a and the return 15b of the region to be cooled and the evaporator 10. On the condenser side, the switching means is also preferably configured to completely separate, in the bypass mode, the condenser outlet 12b from the forward 17a into the region to be heated and to further also completely separate, in the bypass mode, the return 17b from the region to be heated 16, i.e. the line 17b from the condenser inlet 12a. This complete separation is obtained, for example by the switches 24, 26 in Fig. 1 that are controlled via a control line 26a and 24a, respectively. The coupler 28 on the condenser side and the coupler 27 on the evaporator side, respectively, do not have to be configured for complete separation but can also be merely a line coupling, i.e. a line coupling having two inputs and one output. However, as mentioned, complete separation is preferred, such that the couplers 27, 28 are also controlled by a control 29 for the switching means.

In specific embodiments, the heat pump includes, apart from the evaporator 10 and the condenser 12, a temperature raiser 34 for raising the temperature in the evaporated operating liquid. The temperature raiser 34 is preferably configured as radial compressor with a radial impeller, but can also be configured as any other temperature raiser such as any other compressor. Above that, the heat pump includes a feedback means R 35 when the heat pump is configured as closed heat pump. If, however, the heat pump is configured as open heat pump, the feedback means R is not absolutely necessitated.

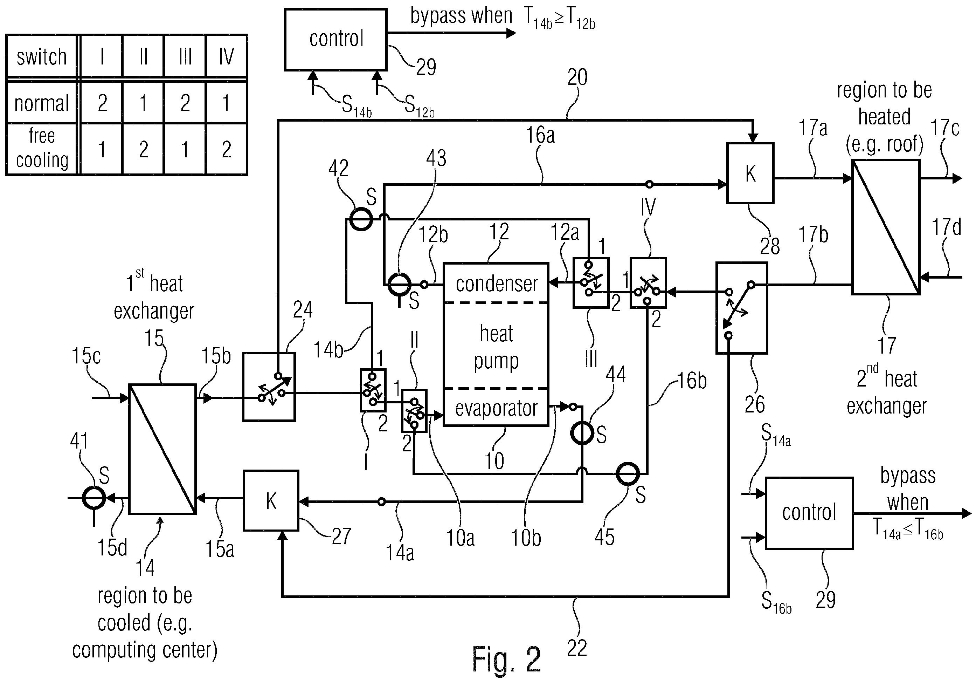

Above that, it should be noted that no further heat exchangers are illustrated in Fig. 1, as they can be used, for example, at the evaporator input 10a, at the condenser output 12b, at the input 15a into the region to be cooled 14 or at the input 17a into the region to be heated 16, wherein heat exchangers are illustrated, for example in Fig. 2 at 15 (heat exchanger on the evaporator side allocated to the region to be cooled 14) or 17 (heat exchanger on the condenser side allocated to the region to be heated 16).

The control 29 for the switching means 24, 26, 28, 27 further comprises a power control unit 29a for providing, on the one hand, a control signal 36a for the temperature raiser and, on the other hand, for providing a control signal 36b for a heat dissipation device. The control signal 36b is preferably provided only in the first operating mode, i.e. in the bypass mode in order to control a heat dissipation device in the region to be heated which is not illustrated in Fig. 1.

Fig. 2 shows a heat pump system with a heat pump and the region to be heated 17 and the region to be cooled 14 and in particular with forward lines to the regions and return lines from the regions.

The heat pump includes the evaporator 10 with the evaporator inlet 10a and the evaporator outlet 10b. Further, the heat pump includes the condenser 12 with the condenser inlet 12a and the condenser outlet 12b. Further, the heat pump typically includes a compressor illustrated at 34 in Fig. 1 for compressing operating liquid evaporated in the evaporator 10, wherein the condenser 12 is implemented to compress the evaporated operating liquid compressed in the compressor. The compressor is preferably implemented as turbo compressor having a typically fast rotating radial impeller to handle the necessitated compressor capacity. An exemplary heat pump is described in EP 2016349 B1 which is incorporated herein by reference.

Above that, the heat pump configuration in Fig. 2 includes forward and return lines, wherein in particular the forward line to the region to be cooled 14 is indicated by 15a, and wherein the return line from the region to be cooled 14 is indicated by 15b. Further, the region to be heated 16 is allocated to the heat pump, which again comprises the forward line 17a and the return line 17b. Above that, in one embodiment of the invention, the heat exchanger 15 is allocated to the region to be cooled 14, and the heat exchanger 17 is allocated to the region to be heated. Both heat exchangers 15, 17 each have again a primary side directed towards the heat pump, and a secondary side facing away from the heat pump, i.e. to the region to be cooled in the case of the heat exchanger 15 and the region to be heated in the case of the heat exchanger 17. The primary side of the heat exchanger 15 includes the hot terminal 15b representing the return from the region to be heater, and includes the cold terminal 15a representing the forward 15a to the region to be cooled. On the secondary side, the heat exchanger further includes a hot terminal 15c and a cold terminal 15d.

Accordingly, the heat exchanger 17 allocated to the region to be heated again includes a hot terminal 17a representing the forward 17a of the region to be heated, and a cold terminal 17b representing the return 17b of the region to be heated 16. On the secondary side, the heat exchanger 17 again includes a hot terminal 17c and a cold terminal 17d. It should be noted that the heat exchangers are not absolutely necessitated. Instead, the operating liquid can also be guided directly into the region to be heated or into the region to be cooled, wherein, however, there will always be a forward and a return into or from the region to be heated or to be cooled. It should be noted that the terms "hot" and "cold" should be seen as designations, wherein, however, it should be noted that the liquid in the hot terminal is hotter than the cold terminal. Thus, the hot terminal of the primary side of the heat exchanger 15 is the terminal 15b and the cold terminal is the terminal 15a.

Fig. 2 further shows a first connecting line 14a arranged between the evaporator 10 and the coupler 27. A second connecting line 14b is arranged between an evaporator switch comprising switches I and II and a condenser switch comprising switches III and IV. The second connecting line 14b is connected to a first input 1 of the first switch I and a first input 1 of the third switch III.

Fig. 2 further shows a third connecting line 16a arranged between the condenser 12 and the coupler 28. A fourth connecting line 16b is arranged between a condenser switch comprising switches III and IV and an evaporator switch comprising switches I and II. The fourth connecting line 16b is connected to a second input 2 of the fourth switch IV and a second input 2 of the second switch II.

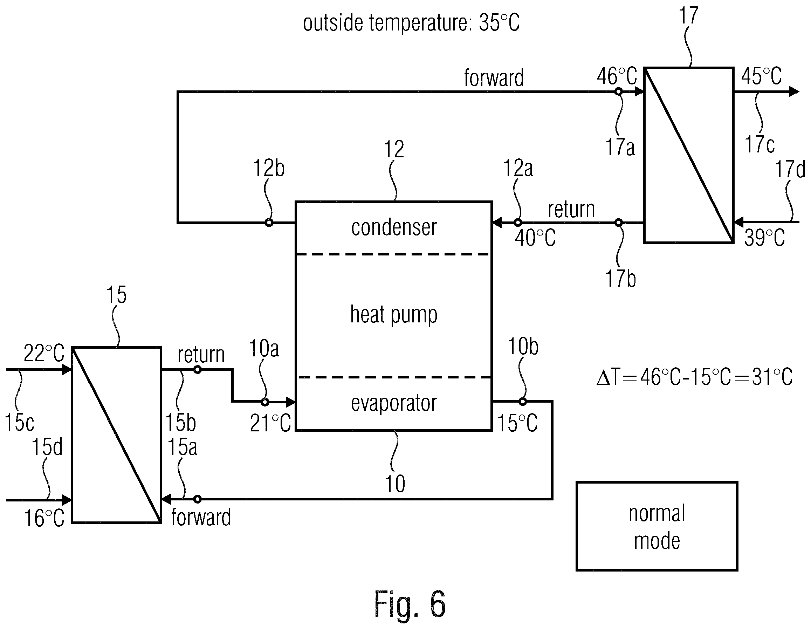

Fig. 2 further shows various temperature specifications at the respective terminals. Thus, in the embodiment shown in Fig. 2, it is assumed that the temperatures of the heat exchanger 17 or its secondary side, i.e. for example 23 °Celsius and 17 °Celsius, are obtained when the air has a temperature of, e.g. 13 °Celsius. Here, the secondary circuit with terminals 17c, 17d of the heat exchanger 17 could be connected to a fan blowing the ambient air having, for example, 13 °Celsius, through a radiator, whereby the liquid is cooled from 23 °Celsius to 17 °Celsius. On the primary side of the heat exchanger 17, this means that the forward has a temperature of 24 °Celsius and the return a temperature of 18 °Celsius. Since the temperature of 18 °Celsius is already within the order in which the evaporator is normally "fed", according to the invention, the return of the heat exchanger 17 or the return from the region to be heated is fed into the evaporator inlet. The evaporator obtains cooling down by 3 °Celsius at the evaporator outlet and thus obtains a temperature of 15 °Celsius, which is suitable for reaching a respective set temperature in the region to be cooled which is, for example, 22 °Celsius. This temperature can be found at the hot terminal of the secondary side of the heat exchanger 15 allocated to the region to be cooled, and reflects the situation where the object to be cooled has output so much energy to the medium that the cooling agent has warmed up from 16 °Celsius to 20 °Celsius. Due to the heat exchanger, this means that the hot terminal of the heat exchanger of the region to be cooled has a temperature of 21 °Celsius. Contrary to the standard configuration where the return is coupled to the evaporator, the return is now coupled to the condenser inlet 12a, and the water which is preferably used as cooling agent is heated to 24 °Celsius in the condenser due to the heat pump operation, and this energy is then dissipated via the region to be heated or the heat exchanger 17. It is decisive that the temperature difference prevailing between the evaporator outlet 10b and the condenser outlet 12b is now merely 9 °Celsius. This is a low temperature difference compared to the normal operation which is indicated in Fig. 6 and which amounts to, for example, 31 °Celsius, According to the invention, the lower ambient temperature is used by the specific wiring such that a low temperature difference is obtained for the heat pump. Since the temperature difference, contrary to the passage, enters the power consumption of the heat pump in a square manner (the passage enters only in a linear manner), any reduction of the temperature difference to be provided by the heat pump results in significant power savings and hence in an efficiency increase.

In a preferred embodiment of the present invention, the configuration of the heat pump is implemented in a switchable manner. For this, a switching means is provided that is configured to separate the evaporator inlet 10a from the return 17b from the region to be heated 16 and from the fourth connecting line 16b, and to couple the return 15b from the region to be cooled to the evaporator inlet 10a. In the embodiment shown in Fig. 2, this functionality is obtained by the two switches I and II representing an evaporator switch. Further, the switching means is configured to separate the condenser inlet 12a from the return 15b from the region to be cooled 14 and from the second connecting line 14b, and to couple the return 17b from the region to be heated 16 to the condenser inlet 12a. This functionality is obtained in the embodiment shown in Fig. 2 by the two switches III and IV representing the evaporator switch.

The switch positions of switches I, II, III, IV are illustrated for the two variations, i.e. the free cooling mode as shown in Fig. 2 and the normal operating mode as shown in Fig. 6. In normal mode, switch I is at position 2, switch II is at position 1, switch III is at position 1 and switch IV is at position 1. In contrast, in the free cooling mode, switch I is at position 1, in the free cooling mode, switch II is at position 2, in the free cooling mode, switch III is at position 1, and in the free cooling mode, switch IV is at position 2. With respect to the circulation of liquids, the free cooling mode is as illustrated in Fig. 1, and with respect to the circulation, the normal operating mode is as illustrated in Fig. 6. This means in the embodiment shown in Fig. 6, based on assumed realistic ambient temperatures in the summer of 35 °Celsius, that the liquid in the cold terminal 17d of the secondary side of the heat exchanger for the region to be heated has a temperature of 39 °Celsius and is heated up to 45 °Celsius due to the heat exchanger effect. On the primary side of the heat exchanger 17, this means that the forward has a temperature of 46 °Celsius and the return a temperature of 40 °Celsius. However, on the evaporator side, as in the embodiment shown in Fig. 2, the secondary side of the heat exchanger 15 has the same set temperatures as in Fig. 2, and the primary side also has the same set temperatures. However, this means that the heat pump with the evaporator 10 and the condenser 12 has to overcome a significant temperature difference in the normal operating mode, i.e. 31 °Celsius when the ambient temperature has an assumed maximum of, e.g., 35 °Celsius.

In preferred embodiments of the present invention, as shown in Fig. 2 by the control 20, reconfiguration is performed depending on the temperature in the region to be heated, i.e. e.g. on the ambient temperature on a roof or on a facade of a building. If, in preferred embodiments of the present invention, the ambient temperature is less than or equal to 18 °Celsius, and in particular less than or equal to 16 °Celsius, the control can control switches I, II, III, IV such that the free cooling mode of Fig. 2 becomes active, while the normal mode will be controlled when the temperatures are above that. Thus, depending on the implementation, the normal mode can already be activated starting from 16 °Celsius ambient temperature, and, depending on the implementation, also, for example, already starting from 18 °Celsius ambient temperature. The exact switching temperature depends in particular also on the implementation of the system and also on the implementation of the heat exchangers or whether heat exchangers are used at all. Further, it is also significant how strongly the heat transfer takes place from the ambient temperature into the secondary side of the heat exchanger 17 or, when no heat exchanger is used, into the forward and return 17a, 17b.

Switching can also take place in a manual or time-controlled manner or by a combination of the stated measures. Manually operated switching can be performed by an operator of the plant, who receives the suggestion to reconfigure, for example by any type of display. Alternatively, switching can also take place in a time-controlled manner, for example such that the plant is operated in the free cooling mode in winter, in the normal operating mode in summer, in the normal operating mode during the day in spring and autumn, and in the free cooling mode at night. Alternatively, the temporal condition and the temperature condition can be combined to control automatically or to give the operator an optimum suggestion for the configuration of the heat pump system.

In the following, the individual switches in Fig. 2 will be discussed in more detail. The switch I includes an input connected to the hot terminal of the primary side of the first heat exchanger 15. Further, the switch includes two outputs, wherein the first output is connected to a first input of the switch III via the second connecting line 14b, and wherein the second output is connected to a first input of the switch II. The switch I can be controlled by the control 20 such that the input is either connected to the first output or to the second output.

The switch II includes a single output connected to the evaporator inlet 10a. Above that, switch II includes two inputs, wherein the first input is connected to the second output of the switch I, and wherein the second input is connected to the second output of the switch IV via the fourth connecting line 16b. Again, the control 20 can control, for example electrically or mechanically or in any other way, the switch II such that the output is either connected to the first input or to the second input.

The switch III again comprises two inputs and one output. The output of the switch III is connected to the condenser inlet 12a. The first input is connected to the first output of the switch I via the second connecting line 14b, and the second input is connected to a first output of the switch IV. Again, the control 20 is implemented to activate the switch III, for example electrically or in any other way, such that either the first input or the second input is connected to the output of the switch and hence to the condenser inlet 12a.

The switch IV includes a single input connected to the cold terminal 17b of the heat exchanger 16 and in particular its primary side, while a first output of the switch IV is connected to a second input of the switch III, while the second output of the switch IV is connected to the second input of the switch II via the fourth connecting line 16b. Again, the control 20 is implemented to activate the switch IV, for example electrically or in any other way, such that the input is either connected to the first output or to the second output. In particular, it is preferred to form or couple the connections in a pressure-tight and liquid-tight manner, wherein respective liquid switches are known in the art and typically have three pipe terminals towards the outside, by which the switches can be coupled to the other respective terminals via pipes, preferably plastic pipes, in a pressure- and liquid-tight manner.

The first connecting line 14a connects the evaporator outlet 10b to a first input of the coupler 27 on the evaporator side and the third connecting line 16 connects the condenser outlet 12b to an input of the coupler 28 on the evaporator side.

While so far, with reference to Fig. 2, switching between the free cooling mode and normal mode has been described, switching from normal mode or free cooling mode to the bypass mode will now be described. After switches 24 and 26 have so far not been in the bypass mode, i.e. the bypass lines 20 and 22 have been deactivated, the same are now active. Thereby, the return 15b of the region to be cooled 14 is now directly connected to the forward 17a of the region to be heated 17. Accordingly, the bypass line 22 is also active, such that the return of the region to be heated 16, i.e. 17b is connected to the forward 15a into the region to be cooled 14 via the bypass line 22.

Above that, several temperature sensors 41, 42, 43, 44, 45 are shown. Depending on the implementation, switching between the free cooling mode and the bypass mode, in particular switching into the bypass mode is performed by the control 29 when the temperature of the sensor 42, i.e. T_{14b} is greater than the temperature of the sensor 43, i.e. T_{12b}.

A respective control can also be performed based on the two sensors 44 and 45 in that the temperature output signals of the sensor 45, i.e. S_{16b} and the sensor 44, i.e. S₁₄ₐ are fed into the control 29, are compared there and that then switching into the bypass mode is performed when the temperature of the sensor 44 is lower than or equal to the temperature of the sensor 45.

Switching into the bypass mode preferably takes place when either the one condition or the other condition or both conditions are fulfilled. The output signals of the two controls 29 shown in Fig. 2 can, for example, be connected by an OR connection in order to determine by the control 29 whether switching into the bypass mode or short-circuit mode between a region to be heated and a region to be cooled has to take place or not.

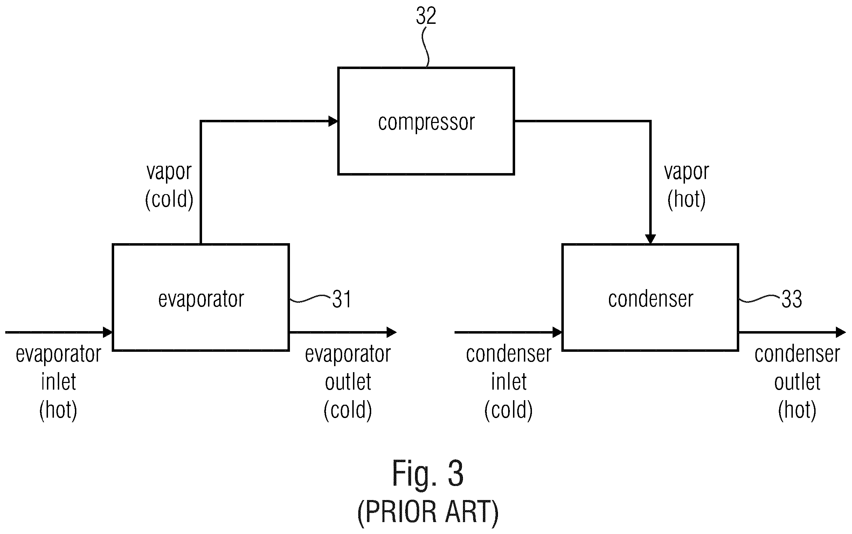

Fig. 3 shows an implementation of a heat pump stage, in particular the structure of a heat pump unit of which one or several can exist in a heat pump stage. A heat pump unit consists of an evaporator 31, a compressor 32 and a condenser 33. The evaporator 31 includes an evaporator inlet for introducing the ("hot") operating medium to be evaporated, and further includes an evaporator outlet for letting out the ("cold") evaporating medium.

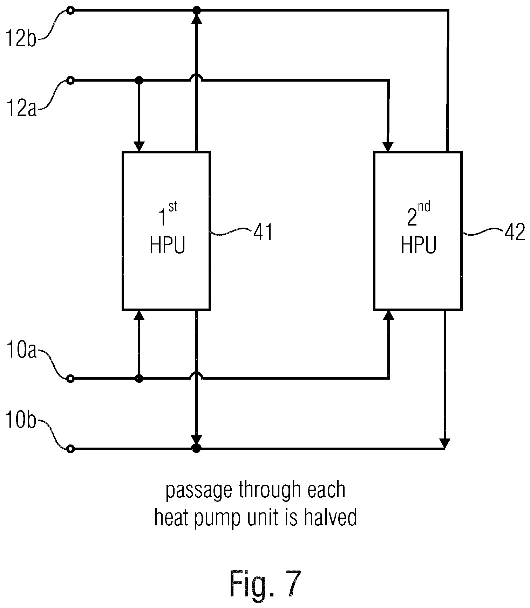

Accordingly, the condenser 33 includes a condenser inlet for introducing the "cold" operating medium and for letting out the "hot" operating medium, wherein the media in the evaporators 31 and 33 are liquids. Above that, by the heat pump process, "cold" vapor from the evaporator 31 is compressed by the compressor 32 and heated, and the "hot" vapor is then fed into the condenser 33, so that the "hot" vapor condenses and the liquid in the condenser 33 which is then let out through the condenser outlet, is heated by the "hot" vapor due to the condensation process. When a heat pump stage merely comprises one heat pump unit shown in Fig. 3, the inlets and outlets illustrated in Figs. 1 and 2 correspond to the inlets and outlets of Fig. 3. Thus, each heat pump stage can also comprise an interconnection of individual heat pump units, such as the two heat pump units 41, 42 in Fig. 7. With respect to the designation of the inflows for the evaporator and the condenser or the outflows for the evaporator and the condenser, it has been assumed that the heat pump in Fig. 1 consists of a parallel connection of two heat pump units 41, 42 of Fig. 7.

Fig. 1 shows the temperature raiser 34 controlled by the control 29 via the control line 36a. The heat pump in particular is configured to supply the temperature raiser 34 with a second power in the second operating mode, i.e. the free cooling mode or the normal mode, and to supply, in the first operating mode, i.e. the bypass mode, the temperature raiser 34 with no power or with an "idle" power which is at least less than 10 % of the second power. Thereby, it is ensured that optimum efficiency and energy savings, respectively, is obtained. In particular, the evaporator 10, the condenser 12 and the temperature raiser 34 are configured without valves for obtaining a simple and again efficient structure. Even when the heat pump operates in the idle mode or is completely deactivated, the occurring temperature short-circuit does not result in a failure since in the first operating mode, where such a temperature short-circuit is obtained, the heat pump is bypassed anyway by the bypass lines 20, 22 and the switches 24, 26.

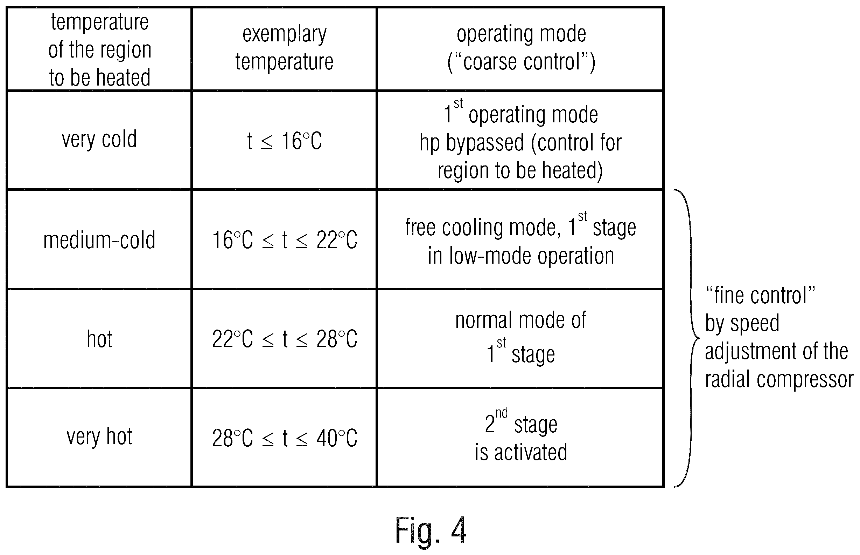

Fig. 4 shows an overview of different modes in which the heat pump according to Fig. 1, Fig. 2, Figs. 8A, 9A can be operated. If the temperature of the region to be heated is very cold, such as less than 16 °C, the operating mode selection will activate the first operating mode where the heat pump is bypassed and the control signal 36b for the heat dissipation device is generated in the region to be heated 16. If the temperature of the region to be heated, i.e., the region 16 of Fig. 1 is, in a medium-cold temperature range, for example in a range between 16 °C and 22 °C, the operating mode control will activate the free cooling mode in which, due to the lower temperature spread, the first stage of the heat pump can operate in a low power mode. If, however, the temperature of the region to be heated is in a hot temperature range, i.e. for example between 22 °C and 28 °C, the heat pump will operate in a normal mode, but in the normal mode with a first heat pump stage. If, however, the outside temperature is very hot, i.e. in a temperature range between 28 °C and 40 °C, the second heat pump stage is activated, which also operates in the normal mode and supports the already running first stage.

Preferably, speed control and "fine control", respectively, of a radial compressor is performed within the temperature raiser 34 of Fig. 1 in the temperature range "medium-cold", "hot", "very hot" in order to operate the heat pump always only with the heat/cold power currently required by the actual conditions.

Mode switching is preferably controlled by a temperature sensor on the condenser side, while fine control or the control signal for the first operating mode depends on a temperature on the evaporator side.

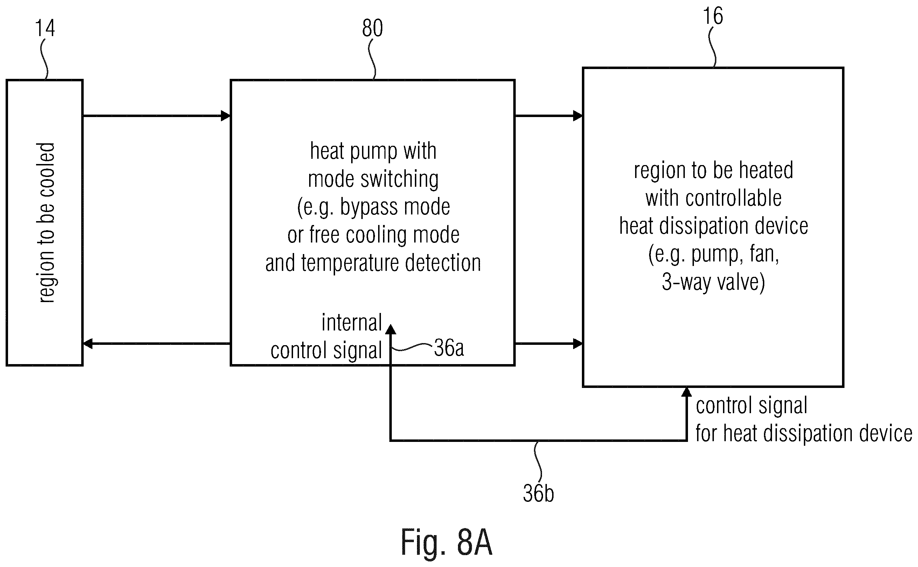

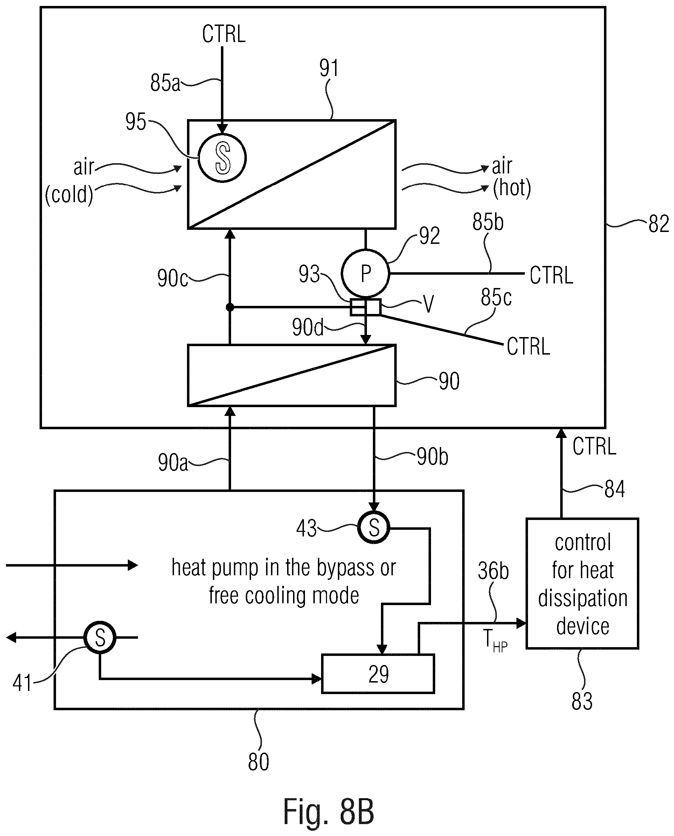

Fig. 8 shows a heat pump system similar to the system of Fig. 1, again with the region to be cooled 14, a heat pump 80 with mode switching, e.g. a bypass mode, a free cooling mode or a normal mode and a temperature sensor.

Further, the region to be heated 16 is provided, which is coupled to the heat pump 80.

Similar to the heat pump 80 in Fig. 1, the heat pump includes the evaporator with the evaporator inlet 10a and the evaporator outlet 10b. Further, a condenser 12 with the condenser inlet 12a and the condenser outlet 12b is provided. Above that, the heat pump includes the temperature raiser 34 for raising a temperature of an operating liquid evaporated by the condenser.

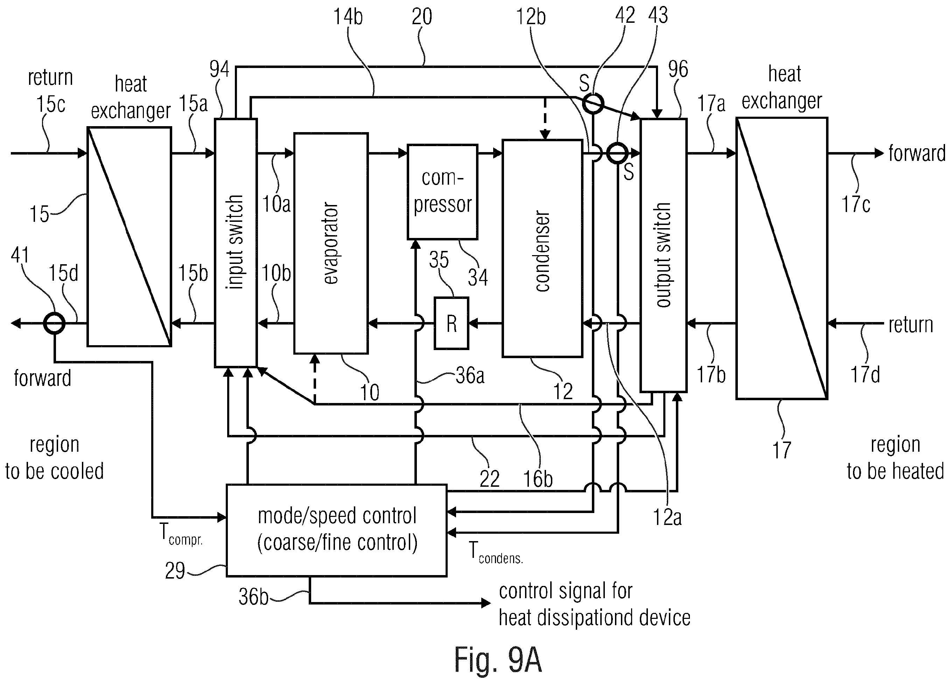

Above that, the switching means implemented by elements 24, 28, 26, 27 of Fig. 1 or for example implemented by the input switch 94 and the output switch 96 of Fig. 9A is provided. The switching means is configured to switch the heat pump between the first operating mode and the different second operating mode, wherein the first operating mode includes a free cooling mode or a bypass mode and wherein the second operating mode includes the free cooling mode or the normal mode. If the first operating mode is the bypass mode, the second operating mode is the free cooling mode or the normal mode. If the first operating mode, however, is already the free cooling mode, the second operating mode is the normal mode.

Further, the heat pump 80 includes temperature sensor means which can include, for example, one or several of the sensors 41, 42, 43, 44, 45 as shown in Fig. 2. The temperature sensor means is configured to detect a temperature at the evaporator (for example sensors 41, 44) or to detect a temperature at the condenser corresponding, for example to the temperature sensors 42, 43, 45. Above that, a control is provided, for example the control 29 of Fig. 1 for providing a control signal based on the detected temperature. Particularly, the control is configured to provide, in the second operating mode, i.e. when the heat pump is operated in the second operating mode, the control signal to the temperature raiser 34, as shown at 36a, or which is referred to in Fig. 8A in block 80 as "internal control signal". If, however, the heat pump is operated in the first operating mode, the control signal that is provided to the control signal output 36b shown in Fig. 1 and also in Fig. 8A based on the temperature. The control signal output 36b can be connected to a control input of a heat dissipation device when the heat pump is operated in the first operating mode. Such a heat dissipation device is shown, for example at 82 in Fig. 8B.

In the embodiment shown in Fig. 8B, the heat dissipation device 82 includes an input heat exchanger 90, an air/liquid/heat exchanger 91, a pump 92 and a 3-way mixer and a 3-way valve 39, respectively. On the input side, the heat exchanger 90 is connected to the heat pump at an input 90a. Above that, the heat exchanger 90 is provided with a heat exchanger output 90b which is also connected to the heat pump 80. Additionally, the heat exchanger 90 has a further heat exchanger output 90c to the further heat exchanger 91 and a further input 90d from the 3-way valve 93.

In the first mode, when the first operating mode is the bypass mode, the input 90a into the heat dissipation device 82, i.e. into the region to be heated is directly connected to the return from the region to be cooled via the switching means of the heat pump, as shown, for example in Fig. 2. If, however, the first operating mode is the free cooling mode, then the heat pump output 90a, which is at the same time the input into the heat exchanger 90, is connected to the condenser output 12b.

In the embodiment shown in Fig. 8B, the temperature sensor means includes the temperature sensor 41 that is shown at the same position as illustrated in Fig. 2.

Depending on the temperature signal at the temperature sensor 41, a control indicated by 92 in Fig. 8B provides the control signal 36b, which is, in the embodiment shown in Fig. 8B, fed into an individual control 83 for the heat dissipation device 82. Preferably, the control signal 36b is provided by the control 92 of the heat pump 80 such that the same can be fed indirectly into a control input 84 of the heat dissipation device, which is, although not shown in Fig. 8B, connected to a control input 85 of a controllable fan 95 which is part of the liquid/air-heat exchanger 91. Alternatively or additionally, the control signal can be fed into a control input 85b of the pump 92 or into the control input 85c of the 3-way valve.

It should be noted that the pump 92 can alternatively also be used in the forward, i.e. in the line 90c or that also an additional (controllable) pump can be used in the line 90c in addition to the pump 92.

If the sensor 41 in the heat pump 80 determines that the liquid in the forward into the region to be cooled 14 is colder than a set value, the heat dissipation device 82 is controlled such that at least the return from the region to be heated via the line 90b becomes hotter. For that, the speed of the pump 92 can be reduced. Alternatively or additionally, the speed of the fan 95 can also be reduced. Alternatively or additionally, the 3-way valve can be controlled such that a greater portion of the agent fed into the heat exchanger 90 via the input 90d originates directly from the output 90c and less agent originates from the heat exchanger 91. It should be noted that it is sufficient that in the heat dissipation device merely either the fan or the pump or the 3-way valve exist and are controlled, respectively. Already one controllable element influencing the heat dissipation and influencing the temperature of the return 90b of the heat exchanger 90, respectively, is sufficient to obtain the desired functionality, i.e. that when it becomes too cold in the region to be heated, this coldness does not enter directly into the heat pump and then into the region to be cooled in the bypass mode or in the free cooling mode. Both in the bypass mode and possibly in the free cooling mode, the output signal of the sensor 41 can additionally be used for controlling the temperature raiser such that when the temperature raiser is constructed as radial compressor with a radial impeller, the speed of the radial impeller is increased or reduced, respectively, depending on the requirements.

In one implementation, the control 29 is configured to compare a temperature of the temperature sensor means, for example of the temperature sensor 41 or a temperature sensor 43, to a set temperature, such that by the control signal, the speed of the radial compressor is increased or reduced depending on a deviation of the temperature from the set value. Preferably, a linear continuous control is used, wherein, however, increments of less than 5 % of the entire speed stroke also allow very fine control and can be used.

Alternatively, the speed of the radial compressor in the temperature raiser 34 can also be controlled by a temperature on the condenser side, such as for example the sensor 43 in Fig. 8B. In particular, the sensor 41 allows a two-fold application. In the normal mode, the same controls the speed of the radial impeller in the radial compressor while the same controls the heat dissipation device 82 in the bypass mode when the radial compressor is deactivated. Depending on the implementation, in the free cooling mode also exclusively the radial impeller can be controlled or also, as far as it is necessitated, the heat dissipation device can be controlled in addition to the control of the radial impeller.

The control of the individual elements in the heat dissipation device 82 preferably takes place proportionally or indirectly proportionally, depending on the control characteristic. Above that, continuous control or again discrete control is performed, but in increments that are each less than 5 % of the entire control strokes.

Fig. 9A shows a further embodiment of a heat pump where the heat exchanger 50 at the end of the heat pump on the evaporator side as well as the heat exchange 17 at the end of the heat pump on the condenser side are part of the heat pump, such that the return from the region to be cooled is the terminal 15c of the heat exchanger 15 and the forward into the region to be cooled is the terminal 15d of the heat exchanger 15. Above that, the forward into the region to be heated is the terminal 17c of the heat exchanger and the return from the region to be heated is the terminal 17d of the heat exchanger. Thus, the heat exchangers 15 and 17 provide the outer terminal region for the heat pump. Above that, input switches 94 are connected between the heat exchangers and the actual evaporator and the actual condenser 12, respectively, as shown in Fig. 9A. Further, the control 29 is provided to perform, in dependence on various temperature signals, such as an evaporator temperature signal provided by the sensor 41, fine control of the compressor 36a and the heat dissipation device, respectively, via the control signal 36b in the free cooling mode on the one hand and in the normal mode on the other hand with respect to the bypass mode on the other hand. Above that, the control 29 receives a condenser-side sensor signal, for example from the sensors 42, 43. The sensor 43 is arranged in the condenser outlet 12d, while the sensor 42 in the free cooling mode represents the condenser inlet.

The input switch 94 and the output switch 96 fulfill the functionalities of the bypass elements 24, 26, 27, 28 of Fig. 2 or Fig. 1 as well as the switches I, II, III IV of Fig. 2, such that the heat pump shown in Fig. 9A can also run in the bypass mode, in the free cooling mode and in the normal mode with one or two stages, especially since the inner heat pump symbolically illustrated by the evaporator 10, the compressor 34, the condenser 12 and the feedback element 35 can consist of two or several connectable stages.

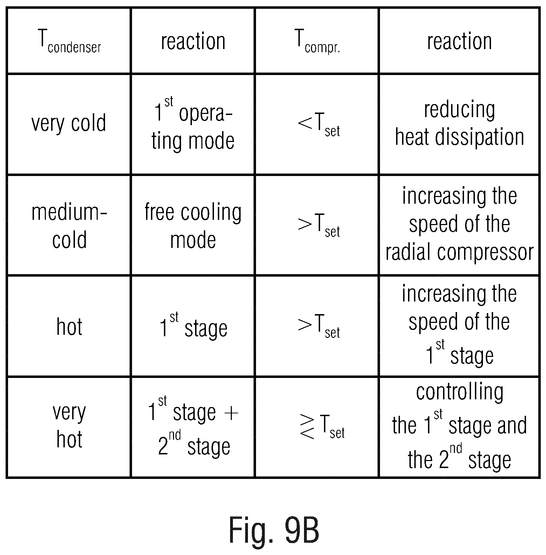

This is shown in tabular form in Fig. 9B. If the condenser temperature is within a very cold temperature range, as a response, the first operating mode is set by the control 29. If it is determined in that mode that the evaporator temperature is lower than a set temperature, reduction of the heat dissipation is obtained by the control signal 36b in the heat dissipation device shown in Fig. 8B. If the condenser temperature is in the medium-cold range, as a response, switching into the free cooling mode by the control 29 is to be expected. If the evaporator temperature is greater than a set temperature, this results, as a response, in an increase of the speed of the radial compressor via the control line 36a. If it is again determined that the condenser temperature is in a hot temperature range, as a response, the first stage is set into normal operation. If it is again determined that at a specific speed of the compressor the evaporator temperature is still greater than a set temperature, this results in an increase of the speed of the first stage, again via the control signal 36a. If it is finally determined that the condenser temperature is in a very hot temperature range, as a response, a second stage is connected in the normal operation. Depending on whether the evaporator temperature, i.e. for example the temperature at the sensor 41 in Fig. 9A is greater or lower than a set temperature, control of the first and/or second stage is performed in order to respond to a changed situation.

It should be noted that the temperature ranges "very cold", "medium cold", "hot", "very hot" represent different temperature ranges whose respective average temperature rises from very cold to medium-cold, to hot, to very hot. The ranges can be directly adjacent as illustrated based on Fig. 4. In embodiments, however, the ranges can also overlap and can be at the stated temperature level or another temperature level that is all in all higher or lower. Further, the heat pump is preferably operated with water as operating agent. Depending on the requirements, other agents can be used.

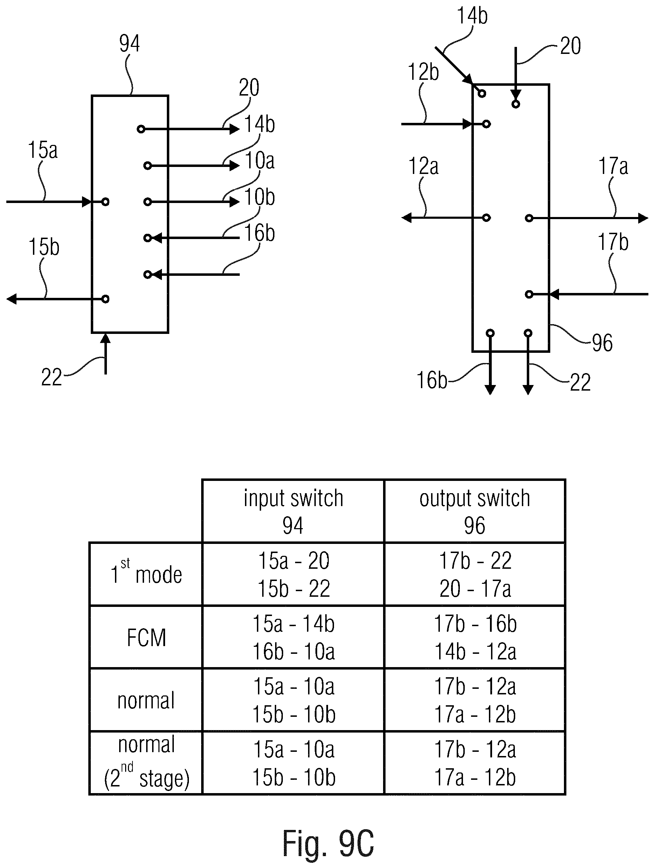

Fig. 9C shows a detailed illustration of switches 94 and 96 with the respective inputs/outputs as illustrated in the overall context in Fig. 9A.

The table in Fig. 9C shows which inputs are in the respective modes with which outputs in the respective switches.

In particular, the input switch 94 includes a first input 15a, a second input 22, a third input 16b (corresponding to the fourth connecting line 16b of Fig. 2) and a fourth input 10b. Above that, the input switch also includes four outputs, namely the first output 20, the second output 14b (corresponding to the second connecting line 14b of Fig. 2), the third output 10a and the fourth output 15b.

The output switch again includes a first input 17b, a second input 20, a third input 14b (corresponding to the second connecting line 14b of Fig. 2) and a fourth input 12b and again a first output 22, a second output 16b (corresponding to the fourth connecting line 16b of Fig. 2), a third output 12a, and a fourth output 17a.

In the bypass mode, the input switch is switched such that the first input is connected to the first output (15a-20). Further, the fourth output 15b is connected to the second input 22 (15b-22).

With regard to the output switch 96, the first input is connected to the first output (17b-22). Further, the second input 20 is connected to the fourth output 17a (20-27a).

In the free cooling mode, the following connections exist in the input switch. The first input is connected to the second output 14b (15a-14b) and the third input 16b is connected to the third output 10a (16b-10a). In the output switch 96, again, the first input 17b is connected to the second output 16b and further, the third input 14b is connected to the third output 12a.

In the normal mode again, in the input switch 94, the first input is connected to the third output (15a-10a). Above that, the fourth output 15b is connected to the fourth input 10b (15b-10b). In the output switch 96 again, in the normal mode, the first input 17b is connected to the third output 12a and further, the fourth output 17a is connected to the fourth input 12b (17a-12b).

In the normal mode where a second stage is activated, the connections are identical as illustrated in the last line of Fig. 9C.

The respective connection in the switches 94, 96 can be implemented, for example as in Fig. 2 with simple switches that are arranged in a cascaded manner or by a more flexible "switching matrix" in order to obtain the necessitated liquid connection of a respective input to a respective output and to prevent liquid connection between the other inputs/outputs.

The heat pump shown in Fig. 9A implements all three aspects, namely on the one hand the aspect of switching between the bypass mode and the free cooling mode or normal mode. The heat pump in Fig. 9A also implements the second aspect, namely the double usage of the temperature sensor on the evaporator side on the one hand, in the bypass mode, for heat dissipation device control, and, on the other hand, in the free cooling and in particular the normal mode for compressor control. The heat pump in Fig. 9A also implements the third aspect, namely the usage of two different temperature sensors, namely the "bottom" temperature sensor close to the evaporator whose output signal is merely used for controlling the compressor on the one hand or the heat dissipation device on the other hand, but does not affect any mode switching. In contrast, temperature measurements on the condenser side, such as by the sensors 42, 43 is used for obtaining mode switching, wherein, however, the output signals of these sensors do not obtain any compressor control and heat dissipation control in the heat dissipation device, respectively.

The three stated inventive aspects can be used together as shown in Fig. 9A. The aspects can however also be used individually or in pairs.

Although specific elements are described as device elements, it should be noted that this description can equally be considered as a description of steps of a method and vice versa. For example, the block diagram shown in Figs. 1 to 3, 5, 6, 7, 8, 9 also represents a flow diagram of a respective inventive method.

Further, it should be noted that the control, for example the control 29 of Figs. 1, 2, 9A can be implemented as software or hardware, wherein the instructions of the table in Fig. 9B or Fig. 4 can be implemented in software or hardware. The implementation of the control can be performed on a non-volatile memory medium, a digital or other memory medium, in particular a disc or a CD with electronically readable control signals, that can cooperate with a programmable computer system such that a respective method for pumping heat and for operating a heat pump, respectively, is performed. Thus, generally, the invention also includes a computer program product with a program code for performing the method stored on a machine-readable carrier when the computer program runs on a computer. In other words, the invention can be realized as a computer program with a program code for performing the method when the computer program runs on a computer.

## Claims

1. Heat pump, comprising:
an evaporator (10) with an evaporator inlet (10a) and an evaporator outlet (10b);
a condenser (12) with a condenser inlet (12a) and a condenser outlet (12b);
a switching means (24, 26, 27, 28, 94, 96) for operating the heat pump in a first operating mode or in a second operating mode,
wherein the switching means (24, 26, 27, 28, 94, 96) is configured to connect, in the first operating mode, a return (15b, 15c) of a region to be cooled (14) to a forward (17a, 17c) of a region to be heated (16) and to connect a return (17b, 17d) of the region to be heated (16) to a forward (15a, 15d) of the region to be cooled (14), and
wherein the switching means (24, 26, 27, 28, 94, 96) is configured to connect, in a second operating mode, the return (15b, 15c) of the region to be cooled (14) to the condenser inlet (12a) and to connect the return (17b, 17d) of the region to be heated (16) to the evaporator inlet (10a);
a temperature sensor unit (41, 42, 43, 44) that is configured to detect a first temperature (41, 44) with regard to the evaporator (10) or a second temperature (42, 43) with regard to the condenser (12); and
a control (29) coupled to the temperature sensor unit (41, 42, 43, 44, 45) and configured to control the switching means (24, 26, 27, 28, 94, 96) in dependence on the first temperature (41, 44) or the second temperature (42, 43), such that the switching means (24, 26, 27, 28, 94, 96) switches from the first operating mode to the second operating mode or from the second operating mode to the first operating mode.

2. Heat pump according to claim 1, wherein the switching means (24, 26, 27, 28, 94, 96) is configured to separate, in the first operating mode, the return (15b, 15c) of the region to be cooled (14) or the forward (15a, 15d) of the region to be cooled (14) from the evaporator (10), such that no liquid connection exists between the forward (15a, 15d) of the region to be cooled and the return (15b, 15c) of the region to be cooled (14) on the one hand and the evaporator inlet (10a) and the evaporator outlet (10b) on the other hand or
wherein the switching means (24, 26, 27, 28, 94, 96) is configured to separate, in the first operating mode, the forward (17a, 17c) of the region to be heated (16) and the return (17b, 17d) of the region to be heated (16) from the evaporator (10), such that no liquid connection exists between the forward (17a, 17c) of the region to be heated (16) and the return (17b, 17d) of the region to be heated (16) on the one hand and the condenser inlet (12a) and the condenser outlet (12b) on the other hand.

3. Heat pump according to claim 1 or 2, further comprising a temperature raiser (34) for an operating liquid evaporated by the evaporator (10), wherein the heat pump is configured, in the second operating mode, to provide the temperature raiser (34) with power, and, in the first operating mode, to supply the temperature raiser (34) with no power or with a power that is less than 10 % of the power in the second operating mode.

4. Heat pump according to claim 3, wherein the evaporator (10), the temperature raiser (34) and the condenser (12) are coupled without valves.

5. Heat pump according to claim 1,
wherein the temperature sensor unit (41, 42, 43, 44) is configured to detect, in the second operating mode, the second temperature (43, T_{12b}) at the condenser outlet (12b), and to detect a further temperature (42, T_{14b}) at the condenser inlet (12a), wherein the control (29) is configured to switch from the second operating mode to the first operating mode when the further temperature (42, T_{14b}) at the condenser inlet (12a) is greater than or equal to the second temperature (43, T_{12b}), or
wherein the temperature sensor unit (41, 42, 43, 44) is configured to detect, in the second operating mode, the first temperature (44, T₁₄ₐ) at the evaporator outlet (10b) and to detect a further temperature (45, T_{16b}) at the evaporator inlet (10a), wherein the control (29) is configured to switch from the second operating mode to the first operating mode, when the first temperature (44, T₁₄ₐ) at the evaporator outlet (10b) is lower than or equal to the further temperature (45, T_{16b}) at the evaporator inlet (10a).

6. Heat pump according to one of the preceding claims,
wherein the switching means (24, 26, 27, 28, 94, 96) comprises
a first switch (24) whose input is coupled to the return (15b, 15c) of the region to be cooled (14) and whose first output is coupled to a first coupler (28) and whose second output is coupled to the evaporator inlet (10a), and
a second switch (26) whose input is coupled to the return (17b, 17d) of the region to be heated (16), whose first output is coupled to the condenser inlet (12a) and whose second output is coupled to a second coupler (27).

7. Heat pump according to claim 6, wherein the first coupler (28) or the second coupler (27) is configured as 3-way branch or as a switch.

8. Heat pump according to one of the preceding claims,
wherein the switching means (24, 26, 27, 28, 94, 96) comprises:
an input switch (94); and
an output switch (96);
wherein the input switch (94) comprises:
a first input (15a) that can be coupled to the return (15b, 15c) of the region to be cooled (14);
a second input (22) that is coupled to the output switch (96);
a first output (20) that is coupled to the output switch (96);
a second output (14b) that can be coupled to the output switch (96) or the condenser inlet (12a);
a third output (10a) that is coupled to the evaporator inlet (10a), or
wherein the output switch (96) comprises:
a first input (17b) that can be coupled to the return (17b, 17d) of the region to be heated (16);
a second input (20) that is coupled to the input switch (94);
a first output (22) that is coupled to the input switch (94);
a second output (16b) that can be coupled to the input switch (94) or the evaporator inlet (10a);
a third output (12a) that is coupled to the condenser inlet (12a).

9. Heat pump according to claim 8,
wherein the control (29) is configured to control the input switch (94) such that,
in the first operating mode, the first input (15a) of the input switch (94) is coupled to the first output (20);
in the second operating mode, which is a free cooling mode, the first input (15a) is coupled to the second output (14b), and
in a third operating mode, the first input (15a) is coupled to the third output (10a), or
wherein the control (29) is configured to control the output switch (96) such that,
in the first operating mode, the first input (17b) is coupled to the first output (22);
in the second operating mode, which is a free cooling mode, the first input (17b) is coupled to the second output (16b), and
in the third operating mode, the first input (17b) is coupled to the third output (12a).

10. Heat pump according to claim 9, wherein the control (29) is configured to control the input switch (94) such that,
in the first operating mode, a fourth output (15b) of the input switch (94) that can be coupled to a forward (15a, 15d) of the region to be cooled (14) is coupled to the second input (22);
in the second operating mode, a third input (16b) that is coupled to the output switch (96) is coupled to a third output (10a);
in the third operating mode, the fourth output is connected to a fourth input (10b) that is coupled to the evaporator outlet (10b), or
wherein the control (29) is configured to control the output switch (96) such that,
in the first operating mode, the second input (20) is connected to a fourth output (17a) that is connected to a forward (17a, 17c) of the region to be heated (16),
in the second operating mode, a third input (14b) that is connected to the input switch (94) is connected to the third output (12a), and
in the third operating mode, a fourth input (12b) that is connected to a return (12b) of the condenser (12) is connected to the fourth output.

11. Heat pump according to one of the preceding claims
wherein the control (29) is configured to obtain, from the temperature sensor unit (41, 42, 43, 44), the first temperature (41, 44) and the second temperature (42, 43), and
wherein the control (29) is configured
to operate the switching means (24, 26, 27, 28, 94, 96) in the first operating mode when the first temperature (41, 44) is in a first temperature range,
to operate the switching means (24, 26, 27, 28, 94, 96) in the second operating mode when the first temperature (41, 44) is in a second temperature range;
to operate the switching means (24, 26, 27, 28, 94, 96) in a third operating mode when the first temperature (41, 44) is in a third temperature range, wherein the first temperature range comprises temperatures that are lower than temperatures in the second temperature range and wherein the second temperature range comprises temperatures that are lower than temperatures in the third temperature range.

12. Heat pump according to one of the preceding claims, wherein the temperature sensor unit (41, 42, 43, 44) is configured to detect the first temperature (41) with regard to the evaporator (10) at the forward (15a, 15d) into the region to be cooled (14),
wherein the control (29) is configured to provide, based on the first temperature (41) with regard to the evaporator (10) in the first operating mode, a control signal (36b) for a heat dissipation means (82) in the region to be heated (16) and to provide, in the second operating mode and a third operating mode, which is a normal mode, based on the first temperature (41) with regard to the evaporator (10), a speed control of a radial impeller of a compressor (36a) for compressing evaporated operating vapor, or
wherein the control is configured to provide, based on the first temperature (41) with regard to the evaporator (10) in the first operating mode, a control signal (36b) for a heat dissipation means (82) in the region to be heated (16) and to provide, in the second operating mode and a third operating mode, which is a normal mode, based on the first temperature (41) with regard to the evaporator (10), a speed control of a radial impeller of a compressor (36a) for compressing evaporated operating vapor, and wherein the control (29) is configured to increase, in the second operating mode and the third operating mode, a speed of the radial impeller, when the first temperature (41) with regard to the evaporator (10) is higher than a set temperature and to lower the speed of the radial impeller when the first temperature (41) with regard to the evaporator (10) is lower than a set temperature, and wherein the control (29) is configured to change, in the first operating mode, a value of the control signal (36b) proportionally or inversely proportional to a deviation of the first temperature (41) with regard to the evaporator (10) from the set temperature.

13. Heat pump according to one of the preceding claims, wherein the temperature sensor unit (41, 42, 43, 44) is configured to detect the first temperature (41) with regard to the evaporator (10) at the forward (15a, 15d) into the region to be cooled (14), and
wherein the control (29) is configured to provide, based on the first temperature (41) with regard to the evaporator (10) in the first operating mode, a control signal (36b) for a heat dissipation means (82) in the region to be heated (16) and to provide, in the second operating mode and a third operating mode, which is a normal mode, based on the first temperature (41) with regard to the evaporator (10), a speed control of a radial impeller of a compressor (36a) for compressing evaporated operating vapor, and wherein the heat pump further comprises the heat dissipation device (82) for the region to be heated (16), wherein the heat dissipation device (82) comprises a controllable pump (92), a controllable fan (95), or a 3-way manifold (93) for mixing a return (17b, 17d) of the region to be heated (16) with the forward (17a, 17c) of the region to be heated (16) on the one hand and a return (90b) from the heat dissipation device (82).

14. Method for pumping heat with a heat pump comprising an evaporator (10) with an evaporator inlet (10a) and an evaporator outlet (10b) and comprising a condenser (12) with a condenser inlet (12a) and a condenser outlet (12b), comprising:
in a first operating mode, connecting a return (15b, 15c) of the region to be cooled (14) to a forward (17a, 17c) of a region to be heated (16) and a return (17b, 17c) of the region to be heated (16) to a forward (15a, 15d) of the region to be cooled (14),
in a second operating mode, connecting the return (15b, 15c) of the region to be cooled (14) to the condenser inlet (12a), and the return (17b, 17d) of the region to be heated (16) to the evaporator inlet (10a);
detecting a first temperature (41, 44) with regard to the evaporator (10) or a second temperature (42, 43) with regard to the condenser (12); and
switching from the first operating mode to the second operating mode or from the second operating mode to the first operating mode in dependence on the first temperature (41, 44) or the second temperature (42, 43).

15. Heat pump system, comprising:
a region to be heated (16) with a return (17b, 17d) from the region to be heated (16);
a region to be cooled (14) with a return (15b, 15c) from the region to be cooled (14); and
a heat pump according to one of claims 1 to 13.

## Patentansprüche

1. Wärmepumpe, aufweisend:
einem Verdampfer (10) mit einem Verdampfereingang (10a) und einem Verdampferausgang (10b);
einem Kondensator (12) mit einem Kondensatoreinlass (12a) und einem Kondensatorauslass (12b);
eine Schalteinrichtung (24, 26, 27, 28, 94, 96) zum Betreiben der Wärmepumpe in einer ersten Betriebsart oder einer zweiten Betriebsart,
wobei die Schalteinrichtung (24, 26, 27, 28, 94, 96) ausgebildet ist, um in der ersten Betriebsart einen Rücklauf (15b, 15c) eines zu kühlenden Bereichs (14) mit einem Vorlauf (17a, 17c) eines zu heizenden Bereichs (16) zu verbinden und um einen Rücklauf (17b, 17d) des zu heizenden Bereichs (16) mit einem Vorlauf (15a, 15d) des zu kühlenden Bereichs (14) zu verbinden, und
wobei die Schalteinrichtung (24, 26, 27, 28, 94, 96) ausgebildet ist, um in einer zweiten Betriebsart den Rücklauf (15b, 15c) des zu kühlenden Bereichs (14) mit dem Kondensatoreingang (12a) zu verbinden und um den Rücklauf (17b, 17d) des zu erwärmenden Bereichs (16) mit dem Verdampfereingang (10a) zu verbinden;
eine Temperatursensoreinheit (41, 42, 43, 44), die konfiguriert ist, um eine erste Temperatur (41, 44) hinsichtlich des Verdampfers (10) oder eine zweite Temperatur (42, 43) hinsichtlich des Kondensators (12) zu erfassen; und
eine Steuerung (29), die mit der Temperatursensoreinheit (41, 42, 43, 44, 45) gekoppelt ist und konfiguriert ist, um die Schaltmittel (24, 26, 27, 28, 94, 96) in Abhängigkeit von der ersten Temperatur (41, 44) oder der zweiten Temperatur (42, 43) so zu steuern, dass die Schaltmittel (24, 26, 27, 28, 94, 96) vom ersten Betriebsmodus in den zweiten Betriebsmodus oder vom zweiten Betriebsmodus in den ersten Betriebsmodus umschalten.

2. Wärmepumpe nach Anspruch 1,
wobei die Schalteinrichtung (24, 26, 27, 28, 94, 96) konfiguriert ist, um, im ersten Betriebsmodus den Rücklauf (15b, 15c) des zu kühlenden Bereichs (14) oder den Vorlauf (15a, 15d) des zu kühlenden Bereichs (14) vom Verdampfer (10) zu trennen, so dass keine Flüssigkeitsverbindung zwischen dem Vorlauf (15a, 15d) des zu kühlenden Bereichs und dem Rücklauf (15b, 15c) des zu kühlenden Bereichs (14) einerseits und dem Verdampfereingang (10a) und dem Verdampferausgang (10b) andererseits besteht, oder
wobei die Schalteinrichtung (24, 26, 27, 28, 94, 96) konfiguriert ist, um, im ersten Betriebsmodus den Vorlauf (17a, 17c) des zu beheizenden Bereichs (16) und den Rücklauf (17b, 17d) des zu beheizenden Bereichs (16) von dem Verdampfer (10) zu trennen, so dass keine Flüssigkeitsverbindung zwischen dem Vorlauf (17a, 17c) des zu beheizenden Bereichs (16) und dem Rücklauf (17b, 17d) des zu beheizenden Bereichs (16) einerseits und dem Kondensatoreingang (12a) und dem Kondensatorausgang (12b) andererseits besteht.

3. Wärmepumpe nach Anspruch 1 oder 2,
die ferner einen Temperaturerhöher (34) für eine vom Verdampfer (10) verdampfte Betriebsflüssigkeit aufweist, wobei die Wärmepumpe konfiguriert ist, um den Temperaturerhöher (34) im zweiten Betriebsmodus mit Leistung zu versorgen und um, im ersten Betriebsmodus den Temperaturerhöher (34) mit keiner Leistung oder mit einer Leistung zu versorgen, die weniger als 10 % der Leistung im zweiten Betriebsmodus beträgt.

4. Wärmepumpe nach Anspruch 3,
wobei der Verdampfer (10), der Temperaturerhöher (34) und der Kondensator (12) ventillos gekoppelt sind.

5. Wärmepumpe nach Anspruch 1,
wobei die Temperatursensoreinheit (41, 42, 43, 44) konfiguriert ist, um, im zweiten Betriebsmodus die zweite Temperatur (43, T_{12b}) am Kondensatorauslass (12b) zu erfassen und um eine weitere Temperatur (42, T_{14b}) am Kondensatoreinlass (12a) zu erfassen, wobei die Steuerung (29) konfiguriert ist, um vom zweiten Betriebsmodus in den ersten Betriebsmodus umzuschalten, wenn die weitere Temperatur (42, T_{14b}) am Kondensatoreinlass (12a) größer als oder gleich zu der zweiten Temperatur (43, T_{12b}) ist, oder
wobei die Temperatursensoreinheit (41, 42, 43, 44) konfiguriert ist, um, im zweiten Betriebsmodus die erste Temperatur (44, T₁₄ₐ) am Verdampferausgang (10b) zu erfassen und um eine weitere Temperatur (45, T_{16b}) am Verdampfereingang (10a) zu erfassen, wobei die Steuerung (29) konfiguriert ist, um vom zweiten Betriebsmodus in den ersten Betriebsmodus umzuschaltet, wenn die erste Temperatur (44, T₁₄ₐ) am Verdampferausgang (10b) kleiner als oder gleich zu der weiteren Temperatur (45, T_{16b}) am Verdampfereingang (10a) ist.

6. Wärmepumpe nach einem der vorhergehenden Ansprüche,
wobei die Schalteinrichtung (24, 26, 27, 28, 94, 96) aufweist
einen ersten Schalter (24), dessen Eingang mit dem Rücklauf (15b, 15c) des zu kühlenden Bereichs (14) gekoppelt ist und dessen erster Ausgang mit einem ersten Koppler (28) gekoppelt ist und dessen zweiter Ausgang mit dem Verdampfereingang (10a) gekoppelt ist, und
einen zweiten Schalter (26), dessen Eingang mit dem Rücklauf (17b, 17d) des zu beheizenden Bereichs (16) gekoppelt ist, dessen erster Ausgang mit dem Kondensatoreingang (12a) gekoppelt ist und dessen zweiter Ausgang mit einem zweiten Koppler (27) gekoppelt ist.

7. Wärmepumpe nach Anspruch 6,
wobei der erste Koppler (28) oder der zweite Koppler (27) als 3-Wege-Verzweigung oder als Schalter ausgeführt ist.

8. Wärmepumpe nach einem der vorhergehenden Ansprüche,
wobei die Schalteinrichtung (24, 26, 27, 28, 94, 96) aufweist:
einen Eingangsschalter (94); und
einen Ausgangsschalter (96);
wobei der Eingangsschalter (94) aufweist:
einen ersten Eingang (15a), der mit dem Rücklauf (15b, 15c) des zu kühlenden Bereichs (14) gekoppelt werden kann;
einen zweiten Eingang (22), der mit dem Ausgangsschalter (96) gekoppelt ist;
einen ersten Ausgang (20), der mit dem Ausgangsschalter (96) gekoppelt ist;
einen zweiten Ausgang (14b), der mit dem Ausgangsschalter (96) oder dem Kondensatoreingang (12a) gekoppelt werden kann;
einen dritten Ausgang (10a), der mit dem Verdampfereingang (10a) gekoppelt ist, oder,
wobei der Ausgangsschalter (96) aufweist:
einen ersten Eingang (17b), der mit dem Rücklauf (17b, 17d) des zu beheizenden Bereichs (16) gekoppelt werden kann;
einen zweiten Eingang (20), der mit dem Eingangsschalter (94) gekoppelt ist;
einen ersten Ausgang (22), der mit dem Eingangsschalter (94) gekoppelt ist;
einen zweiten Ausgang (16b), der mit dem Eingangsschalter (94) oder dem Verdampfereingang (10a) gekoppelt werden kann;
einen dritten Ausgang (12a), der mit dem Kondensatoreingang (12a) gekoppelt ist.

9. Wärmepumpe nach Anspruch 8,
wobei die Steuerung (29) konfiguriert ist, um den Eingangsschalter (94) so zu steuern, dass,
in dem ersten Betriebsmodus der erste Eingang (15a) des Eingangsschalters (94) mit dem ersten Ausgang (20) gekoppelt ist;
in dem zweiten Betriebsmodus, welcher ein Freikühlmodus ist, der erste Eingang (15a) mit dem zweiten Ausgang (14b) gekoppelt ist, und
in einem dritten Betriebsmodus der erste Eingang (15a) mit dem dritten Ausgang (10a) gekoppelt ist, oder
wobei die Steuerung (29) konfiguriert ist, um den Ausgangsschalter (96) so zu steuern, dass,
in dem ersten Betriebsmodus der erste Eingang (17b) mit dem ersten Ausgang (22) gekoppelt ist;
in dem zweiten Betriebsmodus, welcher ein Freikühlmodus ist, der erste Eingang (17b) mit dem zweiten Ausgang (16b) gekoppelt ist, und
in dem dritten Betriebsmodus der erste Eingang (17b) mit dem dritten Ausgang (12a) gekoppelt ist.

10. Wärmepumpe nach Anspruch 9,
wobei die Steuerung (29) konfiguriert ist, um den Eingangsschalter (94) so zu steuern, dass
in dem ersten Betriebsmodus ein vierter Ausgang (15b) des Eingangsschalters (94), der mit einem Vorlauf (15a, 15d) des zu kühlenden Bereichs (14) gekoppelt werden kann, mit dem zweiten Eingang (22) gekoppelt ist;
in dem zweiten Betriebsmodus ein dritter Eingang (16b), der mit dem Ausgangsschalter (96) gekoppelt ist, mit einem dritten Ausgang (10a) gekoppelt ist;
in dem dritten Betriebsmodus der vierte Ausgang mit einem vierten Eingang (10b) verbunden ist, der mit dem Verdampferausgang (10b) gekoppelt ist, oder,
wobei die Steuerung (29) konfiguriert ist, um den Ausgangsschalter (96) so zu steuern, dass
in dem ersten Betriebsmodus der zweite Eingang (20) mit einem vierten Ausgang (17a) verbunden ist, der mit einem Vorlauf (17a, 17c) des zu beheizenden Bereichs (16) verbunden ist,
in dem zweiten Betriebsmodus ein dritter Eingang (14b), der mit dem Eingangsschalter (94) verbunden ist, mit dem dritten Ausgang (12a) verbunden ist, und
in dem dritten Betriebsmodus ein vierter Eingang (12b), der mit einem Rücklauf (12b) des Kondensators (12) verbunden ist, mit dem vierten Ausgang verbunden ist.

11. Wärmepumpe nach einem der vorhergehenden Ansprüche
wobei die Steuerung (29) konfiguriert ist, um von der Temperatursensoreinheit (41, 42, 43, 44) die erste Temperatur (41, 44) und die zweite Temperatur (42, 43) zu erhalten, und
wobei die Steuerung (29) konfiguriert ist,
um die Schaltmittel (24, 26, 27, 28, 94, 96) im ersten Betriebsmodus zu betreiben, wenn die erste Temperatur (41, 44) in einem ersten Temperaturbereich liegt,
um die Schaltmittel (24, 26, 27, 28, 94, 96) im zweiten Betriebsmodus zu betreiben, wenn die erste Temperatur (41, 44) in einem zweiten Temperaturbereich liegt;
um die Schaltmittel (24, 26, 27, 28, 94, 96) in einem dritten Betriebsmodus zu betreiben, wenn die erste Temperatur (41, 44) in einem dritten Temperaturbereich liegt, wobei der erste Temperaturbereich Temperaturen aufweist, die niedriger sind als die Temperaturen im zweiten Temperaturbereich, und wobei der zweite Temperaturbereich Temperaturen aufweist, die niedriger sind als die Temperaturen im dritten Temperaturbereich.

12. Wärmepumpe nach einem der vorhergehenden Ansprüche,
wobei die Temperatursensoreinheit (41, 42, 43, 44) konfiguriert ist, um die erste Temperatur (41) hinsichtlich des Verdampfers (10) am Vorlauf (15a, 15d) in den zu kühlenden Bereich (14) zu erfassen,
wobei die Steuerung (29) konfiguriert ist, um, basierend auf der ersten Temperatur (41) hinsichtlich des Verdampfers (10) im ersten Betriebsmodus ein Steuersignal (36b) für eine Wärmeabführmittel (82) im zu beheizenden Bereich (16) bereitzustellen und um, im zweiten Betriebsmodus und in einem dritten Betriebsmodus, der ein Normalmodus ist, basierend auf der ersten Temperatur (41) hinsichtlich des Verdampfers (10) eine Drehzahlregelung eines Radiallaufrads eines Kompressors (36a) zum Verdichten von verdampftem Betriebsdampf bereitzustellen, oder
wobei die Steuerung konfiguriert ist, um, basierend auf der ersten Temperatur (41) hinsichtlich des Verdampfers (10) im ersten Betriebsmodus ein Steuersignal (36b) für eine Wärmeabführmittel (82) im zu beheizenden Bereich (16) bereitzustellen und um, im zweiten Betriebsmodus und im dritten Betriebsmodus, der ein Normalmodus ist, basierend auf der ersten Temperatur (41) hinsichtlich des Verdampfers (10) eine Drehzahlregelung eines Radiallaufrads eines Kompressors (36a) zum Verdichten von verdampften Betriebsdampf bereitzustellen; und wobei die Steuerung (29) konfiguriert ist, um, im zweiten Betriebsmodus und im dritten Betriebsmodus eine Drehzahl des Radiallaufrads zu erhöhen, wenn die erste Temperatur (41) hinsichtlich des Verdampfers (10) höher als eine Solltemperatur ist, und um die Drehzahl. des Radiallaufrads zu senken, wenn die erste Temperatur (41) hinsichtlich des Verdampfers (10) niedriger als eine Solltemperatur ist, und wobei die Steuerung (29) konfiguriert ist, um, im ersten Betriebsmodus einen Wert des Steuersignals (36b) proportional oder umgekehrt proportional zu einer Abweichung der ersten Temperatur (41) hinsichtlich des Verdampfers (10) von der Solltemperatur zu ändern.

13. Wärmepumpe nach einem der vorhergehenden Ansprüche,
wobei die Temperatursensoreinheit (41, 42, 43, 44) konfiguriert ist, um die erste Temperatur (41) hinsichtlich des Verdampfers (10) am Vorlauf (15a, 15d) in den zu kühlenden Bereich (14) zu erfassen, und
wobei die Steuerung (29) konfiguriert ist, um, basierend auf der ersten Temperatur (41) hinsichtlich des Verdampfers (10) im ersten Betriebsmodus ein Steuersignal (36b) für ein Wärmeabführmittel (82) im zu beheizenden Bereich (16) bereitzustellen und um, im zweiten Betriebsmodus und in einem dritten Betriebsmodus, der ein Normalmodus ist, basierend auf der ersten Temperatur (41) hinsichtlich des Verdampfers (10) eine Drehzahlregelung eines Radiallaufrads eines Kompressors (36a) zum Verdichten von verdampftem Betriebsdampf bereitzustellen, und wobei die Wärmepumpe ferner die Wärmeabführeinrichtung (82) für den zu beheizenden Bereich (16) aufweist, wobei die Wärmeabführeinrichtung (82) eine regelbare Pumpe (92), einen regelbaren Ventilator (95) oder einen 3-Wege-Verteiler (93) zum Mischen eines Rücklaufs (17b, 17d) des zu beheizenden Bereichs (16) mit dem Vorlauf (17a, 17c) des zu beheizenden Bereichs (16) einerseits und einem Rücklauf (90b) von der Wärmeabführeinrichtung (82) andererseits aufweist.

14. Verfahren zum Pumpen von Wärme mit einer Wärmepumpe, die einen Verdampfer (10) mit einem Verdampfereingang (10a) und einem Verdampferausgang (10b) aufweist und einen Kondensator (12) mit einem Kondensatoreingang (12a) und einem Kondensatorausgang (12b) aufweist, das aufweist:
in einem ersten Betriebsmodus das Verbinden eines Rücklaufs (15b, 15c) des zu kühlenden Bereichs (14) mit einem Vorlauf (17a, 17c) eines zu heizenden Bereichs (16) und eines Rücklaufs (17b, 17c) des zu heizenden Bereichs (16) mit einem Vorlauf (15a, 15d) des zu kühlenden Bereichs (14),
in einem zweiten Betriebsmodus das Verbinden des Rücklaufs (15b, 15c) des zu kühlenden Bereichs (14) mit dem Kondensatoreingang (12a) und des Rücklaufs (17b, 17d) des zu erwärmenden Bereichs (16) mit dem Verdampfereingang (10a);
erfassen einer ersten Temperatur (41, 44) hinsichtlich des Verdampfers (10) oder einer zweiten Temperatur (42, 43) hinsichtlich des Kondensators (12); und
umschalten vom ersten Betriebsmodus zu dem zweiten Betriebsmodus oder vom zweiten Betriebsmodus zu dem ersten Betriebsmodus in Abhängigkeit von der ersten Temperatur (41, 44) oder der zweiten Temperatur (42, 43).

15. Wärmepumpensystem, das besteht aus:
einem zu beheizenden Bereich (16) mit einem Rücklauf (17b, 17d) von dem zu beheizenden Bereich (16);
einem zu kühlenden Bereich (14) mit einem Rücklauf (15b, 15c) von dem zu kühlenden Bereich (14); und
einer Wärmepumpe nach einem der Ansprüche 1 bis 13.

## Revendications

1. Pompe à chaleur, comprenant :
un évaporateur (10) avec une entrée d'évaporateur (10a) et une sortie d'évaporateur (10b) ;
un condenseur (12) avec une entrée de condenseur (12a) et une sortie de condenseur (12b) ;
un moyen de commutation (24, 26, 27, 28, 94, 96) pour faire fonctionner la pompe à chaleur dans un premier mode de fonctionnement ou dans un deuxième mode de fonctionnement,
dans laquelle le moyen de commutation (24, 26, 27, 28, 94, 96) est configuré pour relier, dans le premier mode de fonctionnement, un retour (15b, 15c) d'une région à refroidir (14) à un avant (17a, 17c) d'une région à chauffer (16) et pour relier un retour (17b, 17d) de la région à chauffer (16) à un avant (15a, 15b) de la région à refroidir (14), et
dans laquelle le moyen de commutation (24, 26, 27, 28, 94, 96) est configuré pour relier, dans un deuxième mode de fonctionnement, le retour (15b, 15c) de la région à refroidir (14) à l'entrée de condenseur (12a) et pour relier le retour (17b, 17c) de la région à chauffer (16) à l'entrée d'évaporateur (10a) ;
une unité de capteur de température (41, 42, 43, 44) qui est configurée pour détecter une première température (41, 44) par rapport à l'évaporateur (10) ou une deuxième température (42, 43) par rapport au condenseur (12) ; et
un dispositif de commande (29) couplé à l'unité de capteur de température (41, 42, 43, 44, 45) et configuré pour commander le moyen de commutation (24, 26, 27, 28, 94, 96) en fonction de la première température (41, 44) ou de la deuxième température (42, 43) de telle sorte que le moyen de commutation (24, 26, 27, 28, 94, 96) commute du premier mode de fonctionnement au deuxième mode de fonctionnement ou du deuxième mode de fonctionnement au premier mode de fonctionnement.

2. Pompe à chaleur selon la revendication 1, dans laquelle le moyen de commutation (24, 26, 27, 28, 94, 96) est configuré pour séparer, dans le premier mode de fonctionnement, le retour (15b, 15c) de la région à refroidir (14) ou l'avant (15a, 15d) de la région à refroidir (14) de l'évaporateur (10) de telle sorte qu'aucune liaison fluidique n'existe entre l'avant (15a, 15d) de la région à refroidir et le retour (15b, 15c) de la région à refroidir (14) d'un côté et l'entrée d'évaporateur (10a) et la sortie d'évaporateur (10b) de l'autre côté ou
dans laquelle le moyen de commutation (24, 26, 27, 28, 94, 96) est configuré pour séparer, dans le premier mode de fonctionnement, l'avant (17a, 17c) de la région à chauffer (16) et le retour (17b, 17d) de la région à chauffer (16) de l'évaporateur (10) de telle sorte qu'il n'existe aucune liaison fluidique entre l'avant (17a, 17c) de la région à chauffer (16) et le retour (17b, 17d) de la région à chauffer (16) d'un côté et l'entrée de condenseur (12a) et la sortie de condenseur (12b) de l'autre côté.

3. Pompe à chaleur selon la revendication 1 ou 2, comprenant en outre un dispositif élévateur de température (34) pour un liquide de fonctionnement évaporé par l'évaporateur (10), dans laquelle la pompe à chaleur est configurée pour fournir, dans le deuxième mode de fonctionnement, au dispositif élévateur de température (34) de l'énergie et pour ne fournir, dans le premier mode de fonctionnement, au dispositif élévateur de température (34) aucune énergie ou lui fournir de l'énergie qui est inférieure à 10 % de l'énergie dans le deuxième mode de fonctionnement.

4. Pompe à chaleur selon la revendication 3, dans laquelle l'évaporateur (10), le dispositif élévateur de température (34) et le condenseur (12) sont couplés sans soupapes.

5. Pompe à chaleur selon la revendication 1,
dans laquelle l'unité de capteur de température (41, 42, 43, 44) est configurée pour détecter, dans le deuxième mode de fonctionnement, la deuxième température (43, T_{12b}) sur la sortie de condenseur (12b) et pour détecter une autre température (42, T_{14b}) sur l'entrée de condenseur (12a), dans laquelle le dispositif de commande (29) est configuré pour commuter depuis le deuxième mode de fonctionnement dans le premier mode de fonctionnement lorsque l'autre température (42, T_{14b}) sur l'entrée de condenseur (12a) est supérieure ou égale à la deuxième température (43, T_{12b}), ou
dans laquelle l'unité de capteur de température (41, 42, 43, 44) est configurée pour détecter, dans le deuxième mode de fonctionnement, la première température (44, T₁₄ₐ) sur la sortie d'évaporateur (10b) et pour détecter une autre température (45, T_{16b}) sur l'entrée d'évaporateur (10a), dans laquelle le dispositif de commande (29) est configuré pour commuter du deuxième mode de fonctionnement dans le premier mode de fonctionnement lorsque la première température (44, T₁₄ₐ) sur la sortie d'évaporateur (10b) est inférieure ou égale à l'autre température (45, T_{16b}) sur l'entrée d'évaporateur (10a).

6. Pompe à chaleur selon l'une quelconque des revendications précédentes,
dans laquelle le moyen de commutation (24, 26, 27, 28, 94, 96) comprend
un premier commutateur (24) dont l'entrée est couplée au retour (15b, 15c) de la région à refroidir (14) et dont la première sortie est couplée au premier coupleur (28) et dont la deuxième sortie est couplée à l'entrée d'évaporateur (10a), et
un deuxième commutateur (26) dont l'entrée est couplée au retour (17b, 17d) de la région à chauffer (16), dont la première sortie est couplée à l'entrée de condenseur (12a) et dont la deuxième sortie est couplée à un deuxième coupleur (27).

7. Pompe à chaleur selon la revendication 6, dans laquelle le premier coupleur (28) ou le deuxième coupleur (27) est configuré comme une ramification à 3 voies ou comme un commutateur.

8. Pompe à chaleur selon l'une quelconque des revendications précédentes,
dans laquelle le moyen de commutation (24, 26, 27, 28, 94, 96) comprend :
un commutateur d'entrée (94) ; et
un commutateur de sortie (96) ;
dans laquelle le commutateur d'entrée (94) comprend :
une première entrée (15a) qui peut être couplée au retour (15b, 15c) de la région à refroidir (14) ;
une deuxième entrée (22) qui est couplée au commutateur de sortie (96) ;
une première sortie (20) qui est couplée au commutateur de sortie (96) ;
une deuxième sortie (14b) qui peut être couplée au commutateur de sortie (96) ou l'entrée de condenseur (12a) ;
une troisième sortie (10a) qui est couplée à l'entrée d'évaporateur (10a), ou
dans laquelle le commutateur de sortie (96) comprend :
une première entrée (17b) qui peut être couplée au retour (17b, 17d) de la région à chauffer (16) ;
une deuxième entrée (20) qui est couplée au commutateur d'entrée (94) ;
une première sortie (22) qui est couplée au commutateur d'entrée (94) ;
une deuxième sortie (16b) qui peut être couplée au commutateur d'entrée (94) ou à l'entrée d'évaporateur (10a) ;
une troisième sortie (12a) qui est couplée à l'entrée de condenseur (12a).

9. Pompe à chaleur selon la revendication 8,
dans laquelle le dispositif de commande (29) est configuré pour commander le commutateur d'entrée (94) de telle sorte que
dans le premier mode de fonctionnement, la première entrée (15a) du commutateur d'entrée (94) est couplée à la première sortie (20) ;
dans le deuxième mode de fonctionnement, qui est un mode de refroidissement libre, la première entrée (15a) est couplée à la deuxième sortie (14b), et
dans un troisième mode de fonctionnement, la première entrée (15a) est couplée à la troisième sortie (10a), ou
dans laquelle le dispositif de commande (29) est configuré pour commander le commutateur de sortie (96) de telle sorte que
dans le premier mode de fonctionnement, la première entrée (17b) est couplée à la première sortie (22) ;
dans le deuxième mode de fonctionnement, qui est un mode de refroidissement libre, la première entrée (17b) est couplée à la deuxième sortie (16b), et
dans le troisième mode de fonctionnement, la première entrée (17b) est couplée à la troisième sortie (12a).

10. Pompe à chaleur selon la revendication 9, dans laquelle le dispositif de commande (29) est configuré pour commander le commutateur d'entrée (94) de telle sorte que
dans le premier mode de fonctionnement, une quatrième sortie (15b) du commutateur d'entrée (94) qui peut être couplée à un avant (15a, 15b) de la région à refroidir (14) est couplée à la deuxième entrée (22) ;
dans le deuxième mode de fonctionnement, une troisième entrée (16b) qui est couplée au commutateur de sortie (96) est couplée à une troisième sortie (10a) ;
dans le troisième mode de fonctionnement, la quatrième sortie est reliée à une quatrième entrée (10b) qui est couplée à la sortie d'évaporateur (10b) ; ou
dans laquelle le dispositif de commande (29) est configuré pour commander le commutateur de sortie (96) de telle sorte que
dans le premier mode de fonctionnement, la deuxième entrée (20) est reliée à une quatrième sortie (17a) qui est reliée à un avant (17a, 17c) de la région à chauffer (16),
dans le deuxième mode de fonctionnement, une troisième entrée (14b) qui est reliée au commutateur d'entrée (94) est reliée à la troisième sortie (12a), et
dans le troisième mode de fonctionnement, une quatrième entrée (12b) qui est reliée à un retour (12b) du condenseur (12) est reliée à la quatrième sortie.

11. Pompe à chaleur selon l'une quelconque des revendications précédentes,
dans laquelle le dispositif de commande (29) est configuré pour obtenir, de l'unité de capteur de température (41, 42, 43, 44), la première température (41, 44) et la deuxième température (42, 43), et
dans laquelle le dispositif de commande (29) est configuré
pour faire fonctionner le moyen de commutation (24, 26, 27, 28, 94, 96) dans le premier mode de fonctionnement lorsque la première température (41, 44) est dans une première plage de températures,
pour faire fonctionner le moyen de commutation (24, 26, 27, 28, 94, 96) dans le deuxième mode de fonctionnement lorsque la première température (41, 44) est dans une deuxième plage de températures ;
pour faire fonctionner le moyen de commutation (24, 26, 27, 28, 94, 96) dans un troisième mode de fonctionnement lorsque la première température (41, 44) est dans une troisième plage de températures, dans laquelle la première plage de températures comprend des températures qui sont inférieures à des températures dans la deuxième plage de températures et dans laquelle la deuxième plage de températures comprend des températures qui sont inférieures à des températures dans la troisième plage de températures.

12. Pompe à chaleur selon l'une quelconque des revendications précédentes, dans laquelle l'unité de capteur de température (41, 42, 43, 44) est configurée pour détecter la première température (41) par rapport à l'évaporateur (10) à l'avant (15a, 15d) dans la région à refroidir (14),
dans laquelle le dispositif de commande (29) est configuré pour fournir, sur la base de la première température (41) par rapport à l'évaporateur (10) dans le premier mode de fonctionnement, un signal de commande (36b) pour un moyen de dissipation de chaleur (82) dans la région à chauffer (16) et pour fournir, dans le deuxième mode de fonctionnement et un troisième mode de fonctionnement, qui est un mode normal, sur la base de la première température (41) par rapport à l'évaporateur (10), une commande de vitesse d'une roue radiale d'un compresseur (36a) pour comprimer de la vapeur de fonctionnement évaporée, ou
dans laquelle le dispositif de commande est configuré pour fournir, sur la base de la première température (41) par rapport à l'évaporateur (10) dans le premier mode de fonctionnement, un signal de commande (36b) pour un moyen de dissipation de chaleur (82) dans la région à chauffer (16) et pour fournir dans le deuxième mode de fonctionnement et un troisième mode de fonctionnement, qui est un mode normal, sur la base de la première température (41) par rapport à l'évaporateur (10), une commande de vitesse d'une roue radiale d'un compresseur (36a) pour comprimer de la vapeur de fonctionnement évaporée, et dans laquelle le dispositif de commande (29) est configuré pour augmenter, dans le deuxième mode de fonctionnement et le troisième mode de fonctionnement, une vitesse de la roue radiale, lorsque la première température (41) par rapport à l'évaporateur (10 est plus élevée qu'une température définie et pour baisser la vitesse de la roue radiale lorsque la première température (41) par rapport à l'évaporateur (10) est inférieure à une température définie, et dans laquelle le dispositif de commande (29) est configuré pour modifier, dans le premier mode de fonctionnement, une valeur du signal de commande (36b) proportionnellement ou proportionnellement de manière inversée sur un écart de la première température (41) par rapport à l'évaporateur (10) de la température définie.

13. Pompe à chaleur selon l'une quelconque des revendications précédentes, dans laquelle l'unité de capteur de température (41, 42, 43, 44) est configurée pour détecter la première température (41) par rapport à l'évaporateur (10) sur l'avant (15a, 15d) dans la région à refroidir (14), et
dans laquelle le dispositif de commande (29) est configuré pour fournir, sur la base de la première température (41) par rapport à l'évaporateur (10) dans le premier mode de fonctionnement, un signal de commande (36b) pour un moyen de dissipation de chaleur (82) dans la région à chauffer (16) et pour fournir, dans le deuxième mode de fonctionnement et un troisième mode de fonctionnement, qui est un mode normal, sur la base de la première température (41) par rapport à l'évaporateur (10), une commande de vitesse d'une roue radiale d'un compresseur (36a) pour comprimer une vapeur de fonctionnement évaporée, et dans laquelle la pompe à chaleur comprend en outre le dispositif de dissipation de chaleur (82) pour la région à chauffer (16), dans laquelle le dispositif de dissipation de chaleur (82) comprend une pompe pouvant être commandée (92), un ventilateur pouvant être commandé (95), ou un collecteur à 3 voies (93) pour mélanger un retour (17b, 17d) de la région à chauffer (16) avec l'avant (17a, 17c) de la région à chauffer (16) d'un côté et un retour (90b) du dispositif de dissipation de chaleur (82).

14. Procédé de pompage de chaleur avec une pompe à chaleur comprenant un évaporateur (10) avec une entrée d'évaporateur (10a) et une sortie d'évaporateur (10b) et comprenant un condenseur (12) avec une entrée de condenseur (12a) et une sortie de condenseur (12b), comprenant :
dans un premier mode de fonctionnement, la liaison d'un retour (15b, 15c) de la région à refroidir (14) à un avant (17a, 17c) d'une région à chauffer (16) et d'un retour (17b, 17c) de la région à chauffer (16) à un avant (15a, 15d) de la région à refroidir (14),
dans un deuxième mode de fonctionnement, la liaison du retour (15b, 15c) de la région à refroidir (14) à l'entrée de condenseur (12a), et du retour (17b, 17d) de la région à chauffer (16) à l'entrée d'évaporateur (10a) ;
la détection d'une première température (41, 44) par rapport à l'évaporateur (10) ou d'une deuxième température (42, 43) par rapport au condenseur (12) ; et
la commutation du premier mode de fonctionnement au deuxième mode de fonctionnement ou du deuxième mode de fonctionnement au premier mode de fonctionnement en fonction de la première température (41, 44) ou de la deuxième température (42, 43).

15. Système de pompe à chaleur comprenant :
une région à chauffer (16) avec un retour (17b, 17d) provenant de la région à chauffer (16) ;
une région à refroidir (14) avec un retour (15b, 15c) provenant de la région à refroidir (14) ; et
une pompe à chaleur selon l'une quelconque des revendications 1 à 13.
